(19) Europäisches Patentamt
European Patent Office
Office européen des brevets

(11) EP 2 663 613 B1

(12) **EUROPÄISCHE PATENTSCHRIFT**

(45) Veröffentlichungstag und Bekanntmachung des Hinweises auf die Patenterteilung:
**21.09.2016 Patentblatt 2016/38**

(21) Anmeldenummer: **11805412.1**

(22) Anmeldetag: **14.12.2011**

(51) Int Cl.:
***C09K 19/32*** *(2006.01)* ***C09K 19/30*** *(2006.01)*
***C09K 19/34*** *(2006.01)*

(86) Internationale Anmeldenummer:
**PCT/EP2011/006290**

(87) Internationale Veröffentlichungsnummer:
**WO 2012/095139 (19.07.2012 Gazette 2012/29)**

(54) **VERBINDUNGEN FÜR EIN FLÜSSIGKRISTALLINES MEDIUM UND DEREN VERWENDUNG FÜR HOCHFREQUENZBAUTEILE**

COMPOUNDS FOR A LIQUID CRYSTALLINE MEDIUM AND USE THEREOF FOR HIGH FREQUENCY COMPONENTS

COMPOSÉS DESTINÉS À UN MILIEU À L'ÉTAT DE CRISTAL LIQUIDE ET LEUR UTILISATION POUR DES COMPOSANTS À HAUTE FRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.01.2011 DE 102011008207**

(43) Veröffentlichungstag der Anmeldung:
**20.11.2013 Patentblatt 2013/47**

(73) Patentinhaber: **Merck Patent GmbH**
**64293 Darmstadt (DE)**

(72) Erfinder:
- **JASPER, Christian**
  **64283 Darmstadt (DE)**
- **MONTENEGRO, Elvira**
  **69469 Weinheim (DE)**
- **PAULUTH, Detlef**
  **64372 Ober-Ramstadt (DE)**
- **REIFFENRATH, Volker**
  **64380 Rossdorf (DE)**
- **MANABE, Atsutaka**
  **64625 Bensheim (DE)**

(56) Entgegenhaltungen:

| | |
|---|---|
| **EP-A1- 2 073 290** | **WO-A1-2009/086911** |
| **DE-A1-102004 029 429** | **JP-A- 2004 082 439** |
| **JP-A- 2005 120 208** | **US-A1- 2002 110 650** |

- **LIAO Y-M ET AL: "SYNTHESIS AND MESOMORPHIC PROPERTIES OF SUPER HIGH BIREFRINGENCE ISOTHIOCYANATO BISTOLANE LIQUID CRYSTALS", LIQUID CRYSTALS: AN INTERNATIONAL JOURNAL OF SCIENCE AND TECHNOLOGY, TAYLOR & FRANCIS, GB, Bd. 34, Nr. 4, 1. April 2007 (2007-04-01), Seiten 507-517, XP001540579, ISSN: 0267-8292, DOI: 10.1080/02678290701223954**
- **LIAO ET AL.: "High Birefringence Isothiocyanato Bistolane Liquid Crystals for Display Application", INTERNATIONAL DISPLAY MANUFACTURING CONFERENCE: WED-P3-10, 21. Februar 2005 (2005-02-21), Seiten 589-592, XP008150259, in der Anmeldung erwähnt**
- **GAUZA S ET AL: "Super high birefringence isothiocyanato biphenyl-biolane liquid crystals", JAPANESE JOURNAL OF APPLIED PHYSICS, JAPAN SOCIETY OF APPLIED PHYSICS, JP, Bd. 43, Nr. 11A, 10. November 2004 (2004-11-10), Seiten 7634-7638, XP002609353, ISSN: 0021-4922, DOI: 10.1143/JJAP.43.7634 in der Anmeldung erwähnt**
- **WU SHIN-TSON ET AL: "High birefringence and wide nematic range bis-tolane liquid crystals", APPLIED PHYSICS LETTERS, AIP, AMERICAN INSTITUTE OF PHYSICS, MELVILLE, NY, US, Bd. 74, Nr. 3, 18. Januar 1999 (1999-01-18), Seiten 344-346, XP012023047, ISSN: 0003-6951, DOI: 10.1063/1.123066 in der Anmeldung erwähnt**

EP 2 663 613 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- HSU C S ET AL: "SYNTHESIS OF LATERALLY SUBSTITUTED BISTOLANE LIQUID CRYSTALS", LIQUID CRYSTALS: AN INTERNATIONAL JOURNAL OF SCIENCE AND TECHNOLOGY, TAYLOR & FRANCIS, GB, Bd. 27, Nr. 2, 1. Februar 2000 (2000-02-01), Seiten 283-287, XP000932257, ISSN: 0267-8292, DOI: 10.1080/026782900203100 in der Anmeldung erwähnt
- SPELLS D J ET AL: "SYNTHESIS OF TERMINALLY SUBSTITUTED STILBENE-TOLANE LIQUID CRYSTALS", LIQUID CRYSTALS: AN INTERNATIONAL JOURNAL OF SCIENCE AND TECHNOLOGY, TAYLOR & FRANCIS, GB, Bd. 29, Nr. 12, 1. Dezember 2002 (2002-12-01), Seiten 1529-1532, XP001133404, ISSN: 0267-8292, DOI: 10.1080/02678290110113496 in der Anmeldung erwähnt
- CHIN-YEN CHANG ET AL.: LIQUID CRYSTALS, Bd. 35, Nr. 1, 2008, Seiten 1-9, XP008150262, in der Anmeldung erwähnt
- F. BABUDRI ET AL.: SYNTHESIS, Bd. 10, 2008, Seiten 1580-1588, XP008150277, in der Anmeldung erwähnt

## Beschreibung

Die vorliegende Erfindung betrifft Verbindungen mit mindestens drei Ringsystemen, davon mindestens einer 2,6-Naphthylengruppe und zwei ungesättigten Brückengruppen zwischen den Ringsystemen, und die Verwendung der Verbindungen für Hochfrequenzbauteile, flüssigkristalline Medien enthaltend die Verbindungen und diese Medien enthaltende Hochfrequenzbauteile, insbesondere Antennen, speziell für den Gigahertzbereich. Die flüssigkristallinen Medien dienen beispielsweise zur Phasenschiebung von Mikrowellen für abstimmbare 'phased-array' Antennen.

Flüssigkristalline Medien werden seit längerem in elektrooptischen Anzeigen (Liquid Crystal Displays - LCDs) genutzt, um Informationen anzuzeigen.

1,4-Diethinylbenzolderivate werden in den Druckschriften EP 0968988 A1, DE 19907941 A1, DE 10120024 A1 und JP 08012599 A als flüssigkristalline Komponenten vorgeschlagen. Verbindungen mit einer 2,6-Naphthylengruppe sind darin nicht offenbart.

1-(Phenylethinyl)tolane, nachfolgend auch Bistolanverbindungen genannt, mit einer Alkylsubstitution am zentralen Phenylenring sind dem Fachmann bekannt. Z.B. offenbart die Druckschrift S.-T. Wu, C.-S. Hsu, K.-F. Shyu Appl. Phys. Lett. (1999), 74 (3), 344-346 verschiedene flüssigkristalline Bistolanverbindungen mit einer lateralen Methylgruppe der Formel

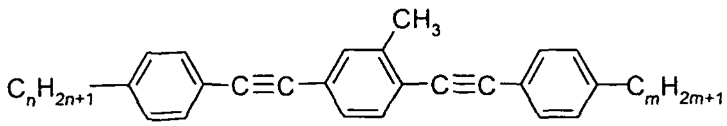

C. S. Hsu, K. F. Shyu, Y.Y. Chuang, S.-T. Wu Liq. Cryst. (2000), 27 (2), 283-287 offenbart, neben solchen flüssigkristallinen Bistolanverbindungen mit einer lateralen Methylgruppe, auch entsprechende Verbindungen mit einer lateralen Ethylgruppe und schlägt deren Verwendung u.a. in "liquid crystal optically phased arrays" vor.

Liao et al. offenbaren in Int. Display Maufacturing Conference, Feb. 21-24 (2005), Wed-P3-10 Isothiocyanat-Verbindungen der Formel

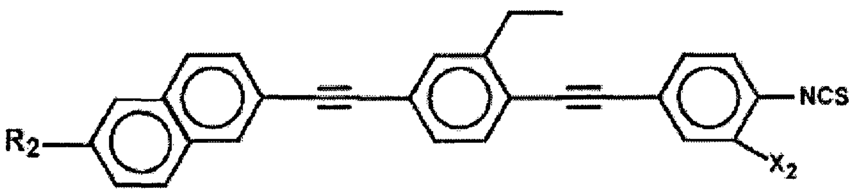

worin $X_2$ H oder F, und $R_2$ eine Alkylkette mit 2 bis 5 C-Atomen bedeutet, als flüssigkristalline Substanzen.

Gauza et al offenbaren in Jap. J. Appl. Phys. (2004), 43, 7634-7638 ebenso eine Isothiocyanat-Verbindung der Formel

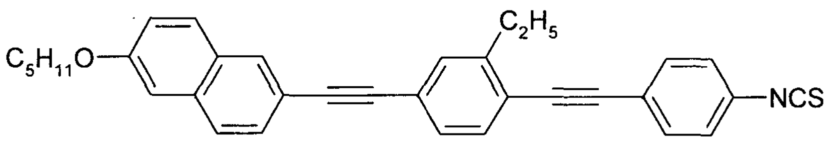

und ein flüssigkristallines Medium mit dieser Verbindung.

Y.-M. Liao et al. offenbaren in Liquid Crystals (2007), 34, 4, 507-517 die gleiche Verbindung als flüssigkristalline Komponente mit hohen $\Delta$n-Werten.

In der Druckschrift WO 2009/086911 A1 werden Verbindungen für ein polymerisierbares Flüssigkristallmaterial offenbart, die analog den oben abgebildeten Verbindungen aus einer 2,6-Naphthylengruppe und zwei Phenylengruppen aufgebaut sind, die über C≡C-Brücken verknüpft sind.

In diesen Druckschriften wird über keine Verwendung als Medium für Hochfrequenzanwendungen berichtet.

In der Druckschrift D.J. Spells et al. (2002), Liquid Crystals, 29 (12), 1529-32 werden sogenannte Stilben-Tolan-Verbindungen offenbart. Die Verbindungen tragen jedoch keine 2,6-Naphthylengruppe. In der Druckschrift Chin-Yen Chang et al. (2008), Liquid Crystals, 35 (1), 1-9 werden ebenfalls Stilben-Tolan-Verbindungen offenbart, die eine $\alpha$-Methyl-Stilbengruppe besitzen, jedoch keine 2,6-Naphthylengruppe. In der Druckschrift F. Babudri et al. (2008), Synthesis, 10, 1580-1588 werden Oligoarylenvinylene offenbart, die auch Bisdifluorstilbene umfassen. Die Verbindungen

sind mit einer Reihe von verschiedenen polaren Gruppen (Säuren, Ester, OH) an den Arylringen substituiert und dienen potentiell als organische Halbleiter. Über flüssigkristalline Eigenschaften wird darin nicht berichtet.

Verbindungen der Formeln

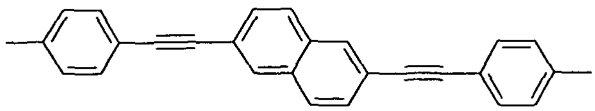

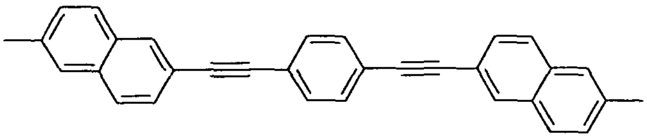

und ähnliche Derivate sind beschrieben als Bestandteile von organischen Dünnschicht-Transistoren (EP 2 073 290 A1, WO 2008/044695 A1) und als Bestandteile von Datenaufzeichnungsmedien (JP 2004-082439 A). Flüssigkristalline Eigenschaften und ihre Verwendung in flüssigkristallinen Medien sind bisher nicht beschrieben.

Ähnliche Phenylacetylene mit 2,6-Naphthalinsystemen werden in der US 2002/0110650 als Flüssigkristalle mit hoher optischer Anisotropie offenbart.

In neuerer Zeit werden flüssigkristalline Medien jedoch auch für die Verwendung in Komponenten, bzw. in Bauteilen, für die Mikrowellentechnik vorgeschlagen, wie z.B. in DE 10 2004 029 429 A und in JP 2005-120208 (A).

DE 10 2004 029 429 A (vgl. oben) beschreibt die Anwendung von herkömmlichen Flüssigkristallmedien in der Mikrowellentechnik, unter anderem in Phasenschiebern. Dort werden bereits flüssigkristalline Medien bezüglich ihrer Eigenschaften im entsprechenden Frequenzbereich untersucht.

Eine technisch wertvolle Anwendung der flüssigkristallinen Medien in der Hochfrequenztechnik beruht auf ihrer Eigenschaft, dass sie sich durch eine variable Spannung in ihren dielektrischen Eigenschaften steuern lassen, besonders für den Gigahertzbereich. Somit lassen sich abstimmbare Antennen konstruieren, die keine beweglichen Teile beinhalten (A. Gaebler, A. Moessinger, F. Goelden, et al., "Liquid Crystal-Reconfigurable Antenna Concepts for Space Applications at Microwave and Millimeter Waves," International Journal of Antennas and Propagation, vol. 2009, Article ID 876989, 7 Seiten, 2009. doi:10.1155/2009/876989).

Die Druckschrift A. Penirschke, S. Müller, P. Scheele, C. Weil, M. Wittek, C. Hock und R. Jakoby: "Cavity Perturbation Method for Characterization of Liquid Crystals up to 35 GHz", Proc. 34th European Microwave Conf. 2 (2004), Amsterdam, 545-548 beschreibt unter anderen die Eigenschaften der bekannten, flüssigkristallinen Einzelsubstanz K15 (Merck KGaA, Deutschland) bei einer Frequenz von 9 GHz.

Die bisher bekannten Zusammensetzungen oder Einzelverbindungen sind jedoch in der Regel mit Nachteilen behaftet. Die meisten von ihnen führen, neben anderen Mängeln, zu unvorteilhaft hohen Verlusten und/oder unzureichenden Phasenverschiebungen bzw. zu geringer Materialgüte.

Für die Anwendung in der Hochfrequenztechnik werden flüssigkristalline Medien mit besonderen, bislang eher ungewöhnlichen, ungebräuchlichen Eigenschaften, bzw. Kombinationen von Eigenschaften benötigt.

Somit sind neue Komponenten für flüssigkristalline Medien mit verbesserten Eigenschaften erforderlich. Insbesondere müssen der Verlust im Mikrowellenbereich verringert und die Materialgüte ($\eta$) verbessert werden. Für abstimmbare Antennen werden auch flüssigkristalline Medien mit schneller Reaktionszeit auf eine geänderte Spannung zwischen den Elektroden der Zelle gefordert.

Außerdem besteht der Bedarf das Tieftemperaturverhalten der Bauteile zu verbessern. Hier sind sowohl eine Verbesserung der Betriebseigenschaften, wie auch der Lagerfähigkeit nötig.

Es besteht daher ein erheblicher Bedarf an flüssigkristallinen Medien mit geeigneten Eigenschaften für entsprechende praktische Anwendungen.

Überraschend wurde gefunden, dass die erfindungsgemäßen Verbindungen einen hohen Klärpunkt (Übergang der nematischen Phase in die isotrope Phase) aufweisen. Gleichzeitig ist der Verlustfaktor im Mikrowellenbereich relativ gering und die Materialgüte ($\eta$) sehr hoch. Außerdem weisen die erfindungsgemäßen Naphthalin-Verbindungen eine äußerst hohe optische Anisotropie ($\Delta n$) auf, die deutlich oberhalb der von gleichartigen Benzolverbindungen liegt. Unter Ausnutzung dieses Effekts wurde nun überraschenderweise gefunden, dass mit den erfindungsgemäßen Verbindungen flüssigkristalline Medien mit einem geeigneten, nematischen Phasenbereich und hohem $\Delta n$ verwirklicht werden können, welche die Nachteile der Materialien des Standes der Technik nicht oder zumindest nur in erheblich geringerem Maße aufweisen.

Ein erster Aspekt der Erfindung betrifft die Verwendung eines Flüssigkristallmediums, das dadurch gekennzeichnet ist, dass es eine oder mehrere Verbindungen der Formel I und

zusätzlich eine oder mehrere Verbindungen der Formel II (wie im Anspruch 1 und an späterer Stelle definiert) enthält,

$$R^1\text{-}(A^1\text{-}Z^1)_m\text{-}A^2\text{-}Z^2\text{-}[A^3]_p\text{-}Z^3\text{-}A^4\text{-}(Z^5\text{-}A^5)_n\text{-}R^2$$

worin
$A^1$, $A^2$, $A^3$, $A^4$, $A^5$ jeweils unabhängig voneinander, auch bei mehrfachem Auftreten,

a) 1,4-Phenylen, worin ein oder mehrere, bevorzugt ein bis zwei CH-Gruppen durch N ersetzt sein können, oder eine 2,6-Naphthylengruppe der Formel

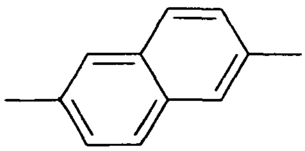

b) einen Rest aus der Gruppe Thiophen-2,5-diyl, Furan-2,5-diyl oder eine Gruppe der Formel

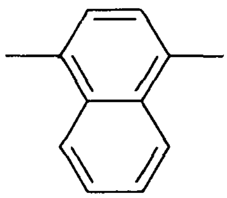

,

oder
c) trans-1,4-Cyclohexylen oder Cyclohexenylen, worin auch eine oder zwei nicht benachbarte $CH_2$-Gruppen durch -O- und/oder -S- ersetzt sein können, und worin H durch F ersetzt sein kann, 1,4-Bicyclo(2,2,2)-octylen, Cylcobut-1,3-diyl und Spiro[3.3]heptan-2,6-diyl,

und worin in den Gruppen a), b) und c)
auch ein oder mehrere H-Atome durch eine Gruppe nach der Definition von L substituiert sein können,
wobei eine oder mehrere der Gruppen $A^2$, $A^3$ und $A^4$ eine Gruppe der Formel

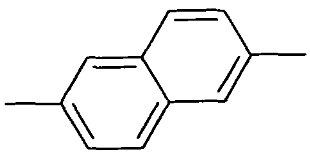

bedeutet,

L unabhängig verzweigtes oder unverzweigtes Alkyl mit 1 bis 12 C-Atomen, Alkenyl oder Alkinyl mit 2 bis 12 C-Atomen, worin jeweils, unabhängig voneinander, ein oder mehrere Wasserstoffatome durch F oder Cl ersetzt sein können und auch eine oder mehrere "-$CH_2$-"-Gruppen durch O ersetzt sein können, $C_3$-$C_6$ Cycloalkyl oder $C_3$-$C_6$ Cycloalkenyl, F, Cl, Br, CN, NCS, SCN oder $SF_5$,

$Z^2$, $Z^3$ unabhängig -C=C- oder

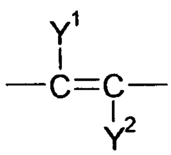

,

$Y^1$, $Y^2$ unabhängig voneinander H, F, Cl, $C_1$-$C_{10}$ Alkyl,

$Z^1$, $Z^5$ unabhängig voneinander, eine Einfachbindung, -C=C-, -CH=CH-, $-CH_2O-$, -(CO)O-, $-CF_2O-$, $-CF_2CF_2-$, $-CH_2CF_2-$, $-CH_2CH_2-$, $-(CH_2)_4-$, -CH=CF- oder -CF=CF-, wobei asymmetrische Brücken nach beiden Seiten orientiert sein können,

$R^1$ und $R^2$ unabhängig voneinander einen halogenierten oder unsubstituierten Alkylrest mit 1 bis 15 C-Atomen, wobei in diesen Resten auch eine oder mehrere $CH_2$-Gruppen jeweils unabhängig voneinander durch -C≡C-, -CH=CH-, -CF=CF-, -CF=CH-, -CH=CF-, -(CO)-, -S- und -O- so ersetzt sein können, dass S-oder O-Atome nicht direkt miteinander verknüpft sind, F, Cl, Br, CN, $CF_3$, $OCF_3$, -NCS oder $SF_5$, $R^2$ auch H,

m, n unabhängig voneinander 0, 1 oder 2, und

p 1 oder 2

bedeuten,
in einem Bauteil für die Hochfrequenztechnik, insbesondere in einem Phasenschieber oder mehreren funktional verbundenen Phasenschiebern oder in einer Antenne. Das Bauteil oder der Phasenschieber umfassen ein flüssigkristallines Medium enthaltend eine oder mehrere Verbindungen der Formel I. In der Regel handelt es sich bei der Antenne um eine 'Phased array' Antenne oder ein Bauteil für Mikrowellen. Das Bauteil, die Antenne oder der Phasenschieber sind vorzugsweise abstimmbar.

Ein zweiter Aspekt der Erfindung betrifft Verbindungen der Formel I*,

$$R^1\text{-}(A^1\text{-}Z^1)_m\text{-}A^2\text{-}Z^2\text{-}[A^3]_p\text{-}Z^3\text{-}A^4\text{-}(Z^5\text{-}A^5)_n\text{-}R^2 \qquad I^*$$

worin
$A^1$, $A^2$, $A^3$, $A^4$, $A^5$ jeweils unabhängig voneinander, auch bei mehrfachem Auftreten,

a) 1,4-Phenylen, worin ein oder mehrere, bevorzugt ein bis zwei CH-Gruppen durch N ersetzt sein können, oder eine 2,6-Naphthylengruppe der Formel

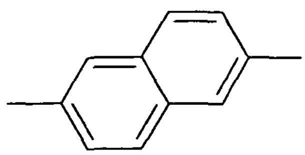

b) einen Rest aus der Gruppe Thiophen-2,5-diyl, Furan-2,5-diyl oder eine Gruppe der Formel

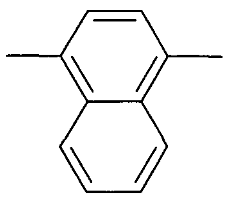

,

oder
c) trans-1,4-Cyclohexylen oder Cyclohexenylen, worin auch eine oder zwei nicht benachbarte $CH_2$-Gruppen durch -O- und/oder -S- ersetzt sein können, und worin H durch F ersetzt sein kann, 1,4-Bicyclo(2,2,2)-octylen, Cylcobut-1,3-diyl und Spiro[3.3]heptan-2,6-diyl,

und worin in den Gruppen a), b) und c)
auch ein oder mehrere H-Atome durch eine Gruppe nach der Definition von L substituiert sein können,
wobei eine oder mehrere Gruppen $A^3$ eine Gruppe der Formel

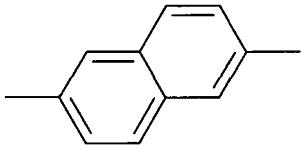

bedeutet, und
wobei die Gruppen $A^2$, $A^3$ und $A^4$ mit insgesamt mindestens einer oder mehreren Gruppen L substituiert sind,

L unabhängig verzweigtes oder unverzweigtes Alkyl mit 1 bis 12 C-Atomen, Alkenyl oder Alkinyl mit 2 bis 12 C-Atomen, worin jeweils, unabhängig voneinander, ein oder mehrere Wasserstoffatome durch F oder Cl ersetzt sein können und auch eine oder mehrere "-$CH_2$-"-Gruppen durch O ersetzt sein können, $C_3$-$C_6$ Cycloalkyl oder $C_3$-$C_6$ Cycloalkenyl, F, Cl, Br, CN, NCS, SCN oder $SF_5$,

$Z^2$, $Z^3$ -C≡C- oder

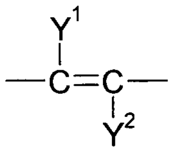 ,

$Y^1$, $Y^2$ unabhängig voneinander H, F, Cl, $C_1$-$C_{10}$ Alkyl,

$Z^1$, $Z^5$ unabhängig voneinander, eine Einfachbindung, -C≡C-, -CH=CH-, -$CH_2$O-, -(CO)O-, -$CF_2$O-, -$CF_2CF_2$-, -$CH_2CF_2$-, -$CH_2CH_2$-, -$(CH_2)_4$-, -CH=CF- oder -CF=CF-, wobei asymmetrische Brücken nach beiden Seiten orientiert sein können,

$R^1$ und $R^2$ unabhängig voneinander einen halogenierten oder unsubstituierten Alkylrest mit 1 bis 15 C-Atomen, wobei in diesen Resten auch eine oder mehrere $CH_2$-Gruppen jeweils unabhängig voneinander durch -C≡C-, -CH=CH-, -CF=CF-, -CF=CH-, -CH=CF-, -(CO)- und -S- so ersetzt sein können, dass S-Atome nicht direkt miteinander verknüpft sind, F, Cl, Br, CN, $CF_3$, $OCF_3$ oder $SF_5$, $R^2$ auch H,

m, n unabhängig voneinander 0, 1 oder 2, und

p 1 oder 2

bedeuten.

Die erfindungsgemäß verwendeten Verbindungen der Formel I umfassen auch Verbindungen mit einer Endgruppe -NCS und Verbindungen ohne eine laterale Gruppe L (vgl. Anspruch 1). Bevorzugt handelt es sich dabei um Verbindungen der Formel I* und der bevorzugten Unterformen. Nachfolgend werden die Verbindungen der Formel I und I* auch gemeinsam als Verbindungen der Formel I bezeichnet, sofern nicht explizit auf die "erfindungsgemäß verwendeten" Verbindungen der Formel I verwiesen wird.

Die Verbindungen der Formel I weisen mindestens drei Ringsysteme, darunter wenigstens eine 2,6-Naphthylen-Gruppe auf, die durch bestimmte Brückengruppen ($Z^{2/3}$, optional $Z^{1/5}$) verbunden sind.

Die Doppelbindungen der Formel -$CY^1$=$CY^2$- zwischen den Ringen $A^1$ bis $A^5$, soweit vorhanden, sowie optionale Doppelbindungen in den Gruppen $R^1$ und $R^2$ besitzen vorzugsweise die trans-Konfiguration (E-Konfiguration).

Die Verbindungen der Formel I besitzen einen hohen Klärpunkt, einen niedrigen Schmelzpunkt und eine außerordentlich hohe optische Anisotropie ($\Delta$n). Vorteilhaft ist der relativ geringe Verlustfaktor im Mikrowellenspektrum, der hohe Wert für die Steuerbarkeit und die daraus resultierende hohe Materialgüte. Die Verbindungen besitzen allein oder in Mischung mit weiteren mesogenen Komponenten über einen breiten Temperaturbereich eine nematische Phase. Diese Eigenschaften machen sie besonders geeignet für die Verwendung in Bauteilen für die Hochfrequenztechnik, insbesondere in flüssigkristallinen Phasenschiebern. Erfindungsgemäße flüssigkristalline Medien besitzen die entsprechenden Eigenschaften, z. B. einen breiten Phasenbereich und außerdem eine gute Tieftemperaturstabilität.
Bevorzugte Verbindungen der Formel I sind durch die Auswahl eines oder mehrerer der folgenden Parameter gekennzeichnet:

Der Zähler m ist bevorzugt 0 oder 1, besonders bevorzugt 0. Der Zähler n ist bevorzugt 0 oder 1, besonders bevorzugt 0. m + n ist bevorzugt 0 oder 1. m + n + p ist bevorzugt 1 oder 2, d.h. die Gesamtzahl der Ringsysteme in

Formel I ist bevorzugt 3 oder 4.

Die Gruppen $A^2$, $A^3$ und $A^4$ sind besonders bevorzugt mit insgesamt ein, zwei, drei oder vier Gruppen L substituiert.

Bevorzugt sind zwei oder drei Gruppen aus $A^2$, $A^3$ und $A^4$, bevorzugt drei, eine Gruppe nach Definition a) oder b), bevorzugt nach a). Dabei können auch ein oder mehrere H-Atome durch eine Gruppe nach der Definition von L substituiert sein.

Bevorzugt bedeuten die eine oder mehrere Gruppen $A^3$ genau eine 2,6-Naphthylengruppe, d. h. p ist bevorzugt 1.

Eine der Gruppen $A^2$, $A^3$ oder $A^4$ ist besonders bevorzugt durch mindestens eine Gruppe L substituiert und hat besonders bevorzugt eine Struktur der Formel

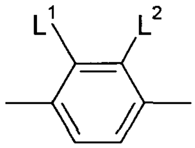

worin

$L^1$ und $L^2$ unabhängig H oder L bedeuten,

wobei vorzugsweise wenigstens $L^1$ oder $L^2$ eine Bedeutung von L annehmen, also nicht H bedeuten.

Im Falle von Verbindungen mit hoher dielektrischer Anisotropie ist eine der Gruppen $A^2$ und $A^4$ durch bis zu zwei Fluoratome substituiert, die bevorzugt in ortho-Stellung zum terminalen Substituenten $R^1/R^2$ stehen.

Die Ringgruppen $A^1$ und $A^5$ sind, soweit vorhanden, unabhängig voneinander bevorzugt ein 1,4-Phenylen, worin auch ein oder mehrere H-Atome gegen eine Gruppe gemäß der Definition von L unabhängig voneinander ersetzt sein können.

Die Brückengruppen $Z^1$ und $Z^5$ sind, soweit vorhanden, unabhängig voneinander bevorzugt eine Einfachbindung, -C≡C-, -CF=CF- oder -CH=CH-, besonders bevorzugt eine Einfachbindung. Durch diese Gruppen werden unter anderem ein hoher $\Delta n$-Wert und gute Phaseneigenschaften unterstützt.

$Z^2$ und $Z^3$ sind bevorzugt eine Gruppe -C≡C- und die andere Gruppe -CF=CF-, oder beide eine Gruppe -C≡C-. $Z^2$ und $Z^3$ sind besonders bevorzugt eine Gruppe -C≡C- und die andere Gruppe -CF=CF-; in dieser Kombination wird ein besonders breiter flüssigkristalliner Phasenbereich erreicht.

$Y^1/Y^2$ sind bevorzugt H/F, F/H, F/F, Cl/F, $CH_3$/F, F/$CH_3$ oder F/Cl und besonders bevorzugt F/F.

Einer der Reste $R^1$ oder $R^2$, bevorzugt $R^1$, bedeutet bevorzugt einen geradkettigen Alkylrest mit 1 bis 15 C-Atomen, wobei in diesen Resten auch eine oder mehrere $CH_2$-Gruppen jeweils unabhängig voneinander durch -C≡C-, -CH=CH-, -(CO)O-, -O(CO)-, -(CO)-, -S- oder -O- so ersetzt sein können, dass O-Atome nicht direkt miteinander verknüpft sind. Bevorzugt sind die Gruppen $R^1$ und $R^2$ beide ein Alkyl mit 2 bis 7 C-Atomen. Dabei bedeuten $R^1$ und $R^2$ beispielsweise Propyl und Hexyl oder Butyl und Butyl, ferner Propyl und Pentyl, Propyl und Hexyl oder Butyl und Pentyl.

In einer weiteren bevorzugten Ausführungsform der Erfindung ist die Gruppe $R^1$ oder $R^2$ eine polare Gruppe (F, Cl, CN, halogenierter Alkyl oder halogenierter Alkoxyrest mit 1 bis 5 C-Atomen, insbesondere $CF_3$ oder $OCF_3$ oder $SF_5$). Die entsprechenden Verbindungen der Formel I weisen eine deutlich positive dielektrische Anisotropie ($\Delta\varepsilon$) auf. Der $\Delta\varepsilon$-Wert beträgt bevorzugt 3 oder mehr.

Eine der Ringgruppen $A^{1-5}$ hat bevorzugt eine Teilstruktur ausgewählt aus den folgenden Formeln:

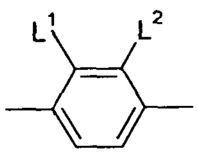 , 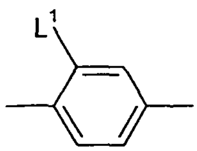 oder 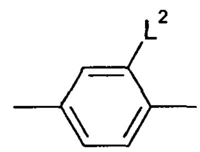 ,

worin $L^{1/2}$ wie L definiert sind, und besonders bevorzugt F, Methyl oder Ethyl bedeutet.

Die 2,6-Naphthylengruppe kann unsubstituiert oder ebenfalls substituiert sein. Bevorzugt ist sie unsubstituiert. Sie hat bevorzugt eine der folgenden Bedeutungen:

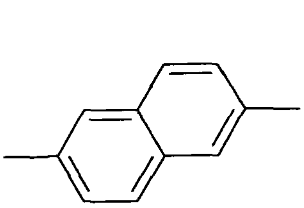 , 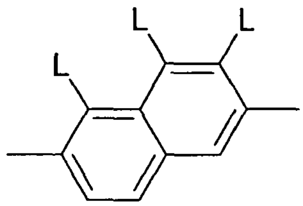 , 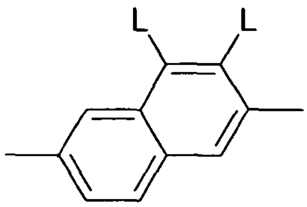 ,

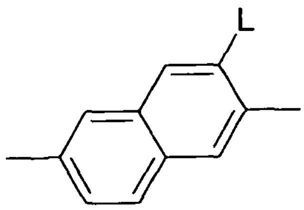 , 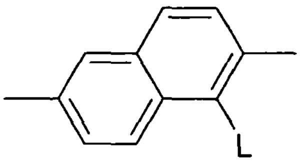

oder

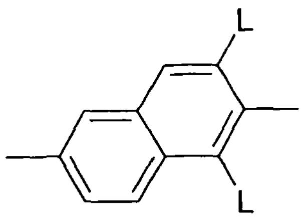 ,

wobei diese Reste nach beiden Seiten ausgerichtet sein können, und L hierbei bevorzugt F bedeutet.

Die Gruppen $L^1$ und $L^2$ bzw. L in den vor- und nachstehend genannten Formeln bedeuten bevorzugt jeweils unabhängig F, Cl, CN, voneinander verzweigtes oder unverzweigtes Alkyl, Alkenyl oder Alkinyl mit 1 bis 8 C-Atomen, worin unabhängig voneinander ein oder mehrere Wasserstoffatome durch F oder Cl ersetzt sein können und auch eine oder mehrere "$-CH_2-$"-Gruppen durch O ersetzt sein können, substituiertes oder unsubstituiertes Cycloalkyl oder Cycloalkenyl, besonders bevorzugt F, Cl, Alkyl mit 1 bis 5 C-Atomen, Alkenyl mit 2 bis 5 C-Atomen, Cyclopropyl oder Cyclobutyl. Bevorzugt ist eine Gruppe aus $L^{1/2}$ ein F, Methyl, Ethyl, Cyclopropyl oder Cl, besonders bevorzugt F, und die andere Gruppe ist wie oben definiert, oder bevorzugt F, Cl, Alkyl mit 1 bis 5 C-Atomen, Alkenyl mit 2 bis 5 C-Atomen, Cyclopropyl, oder Cyclobutyl.

Besonders bevorzugt ist eine Gruppe $A^{1-5}$ neben einer Difluorethylenbrücke, die unsubstituiert ist oder derart einfach substituiert ist, dass der optionale Substituent L auf die der Fluorethylenbrücke abgewandten Seite zeigt:

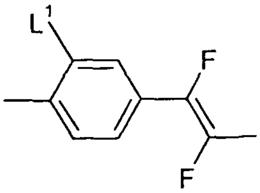

Für den Fall, dass p = 2 ist, bedeuten die beiden Ringe $A^3$ bevorzugt, aber nicht ausschließlich, zusammen eine Biphenylgruppe ausgewählt aus den folgenden Formeln:

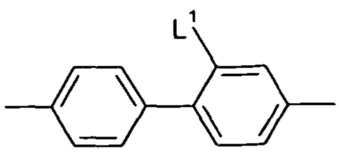 , 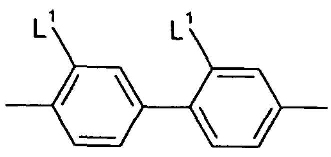 ,

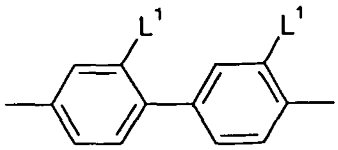 , 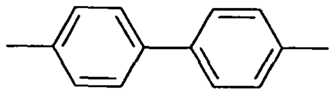 ,

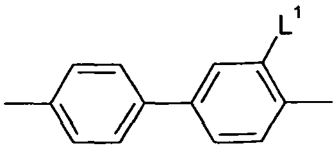 , 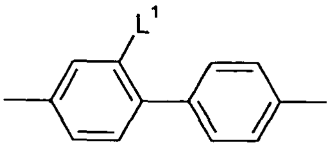

oder

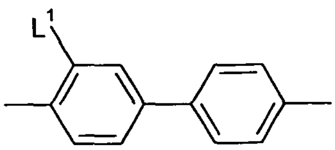 , 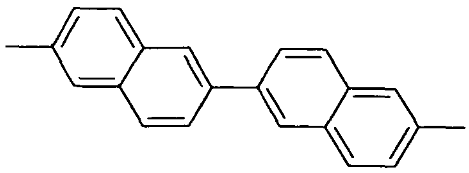

worin $L^1$ wie L definiert ist.

Bevorzugte Ausführungsformen der Erfindung werden daher durch die folgenden beispielhaften Strukturen repräsentiert:

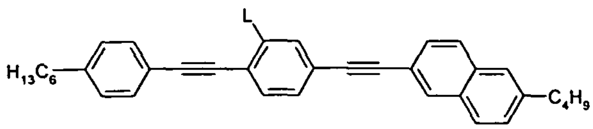

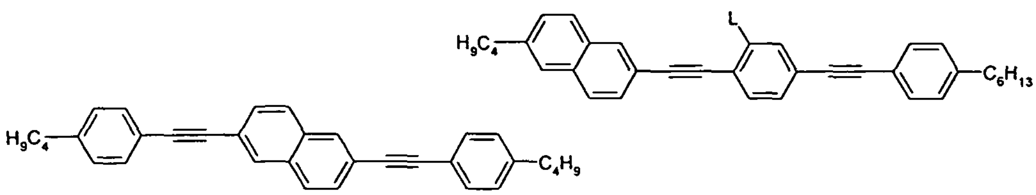

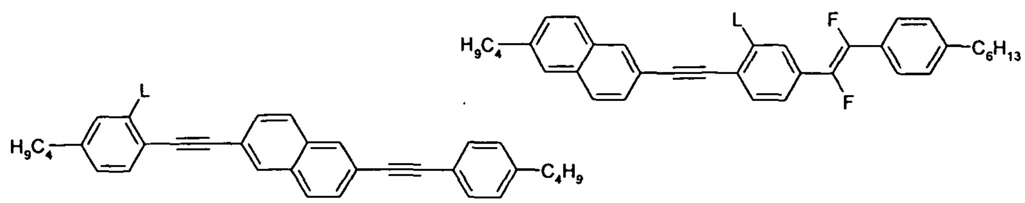

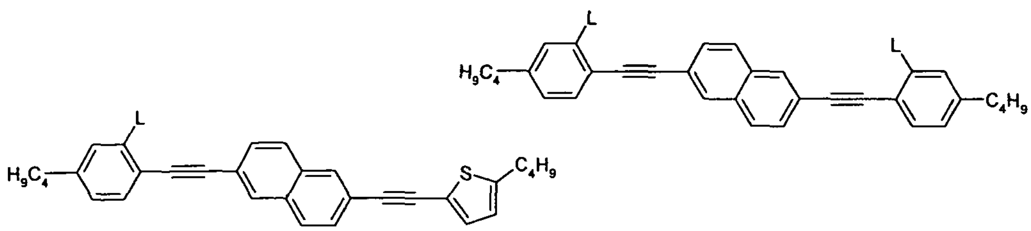

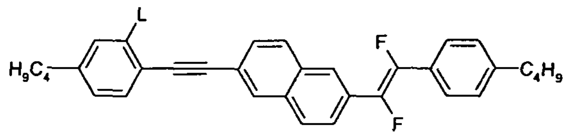

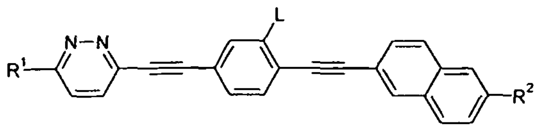

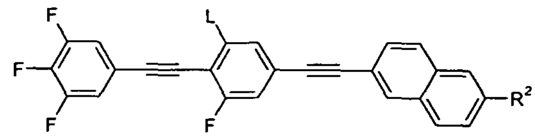

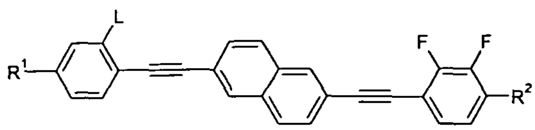

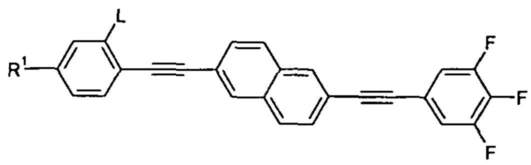

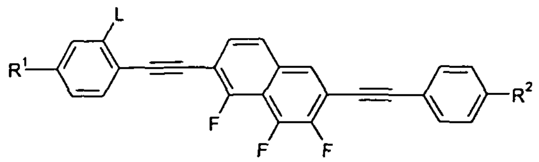

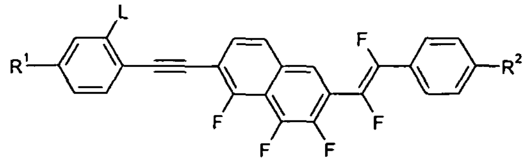

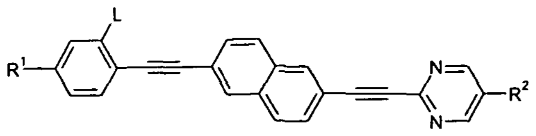

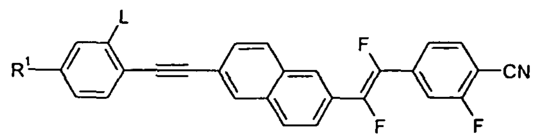

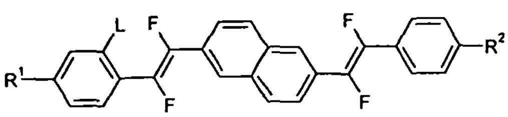

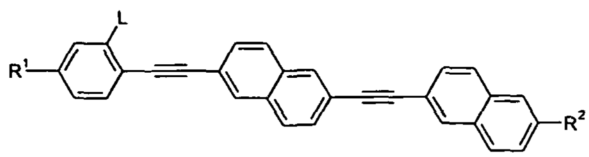

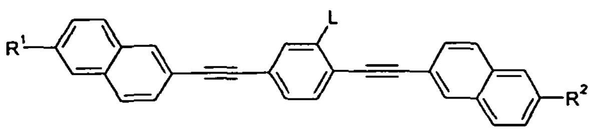

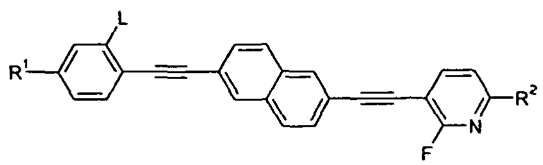

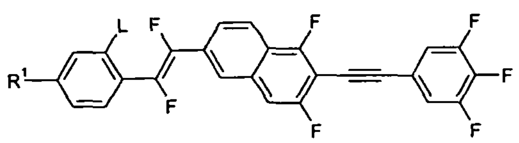

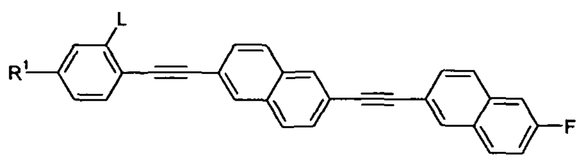

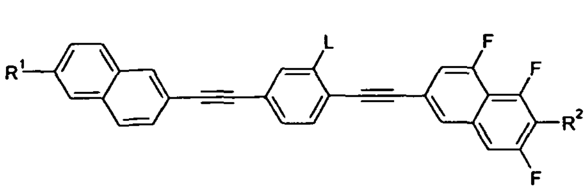

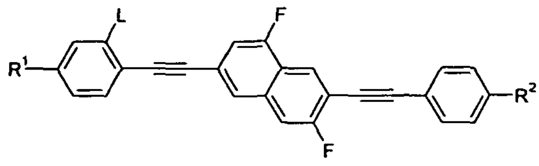

worin die Gruppen wie in Formel I definiert sind, insbesondere $R^1$ und $R^2$ bedeuten unabhängig einen Alkylrest mit 2 bis 7 C-Atomen, beispielsweise einen Propyl- und die andere Gruppe einen Hexylrest oder beide Gruppen gleichzeitig einen Propyl-, Butyl-, Pentyl- oder Hexylrest. Q bedeutet beispielsweise S. L bedeutet beispielsweise F, Methyl oder Ethyl.

Die Verbindungen der Formel I können vorteilhaft, wie an den folgenden beispielhaften Synthesen ersichtlich, hergestellt werden (Schema 1/2). Die Parameter $R^{1/2}$, $A^{1-5}$, $Z^{1/5}$, m und n sind darin wie vor- und nachstehend definiert. R hat die Bedeutung von $R^{1/2}$. Schema 1 und 2 beschreiben hinreichend den synthetischen Zugang zu den hier vorgestellten Verbindungen. Je nach Verbindung ergibt sich lediglich eine andere Abfolge der im Beispielteil beschriebenen Experimente.

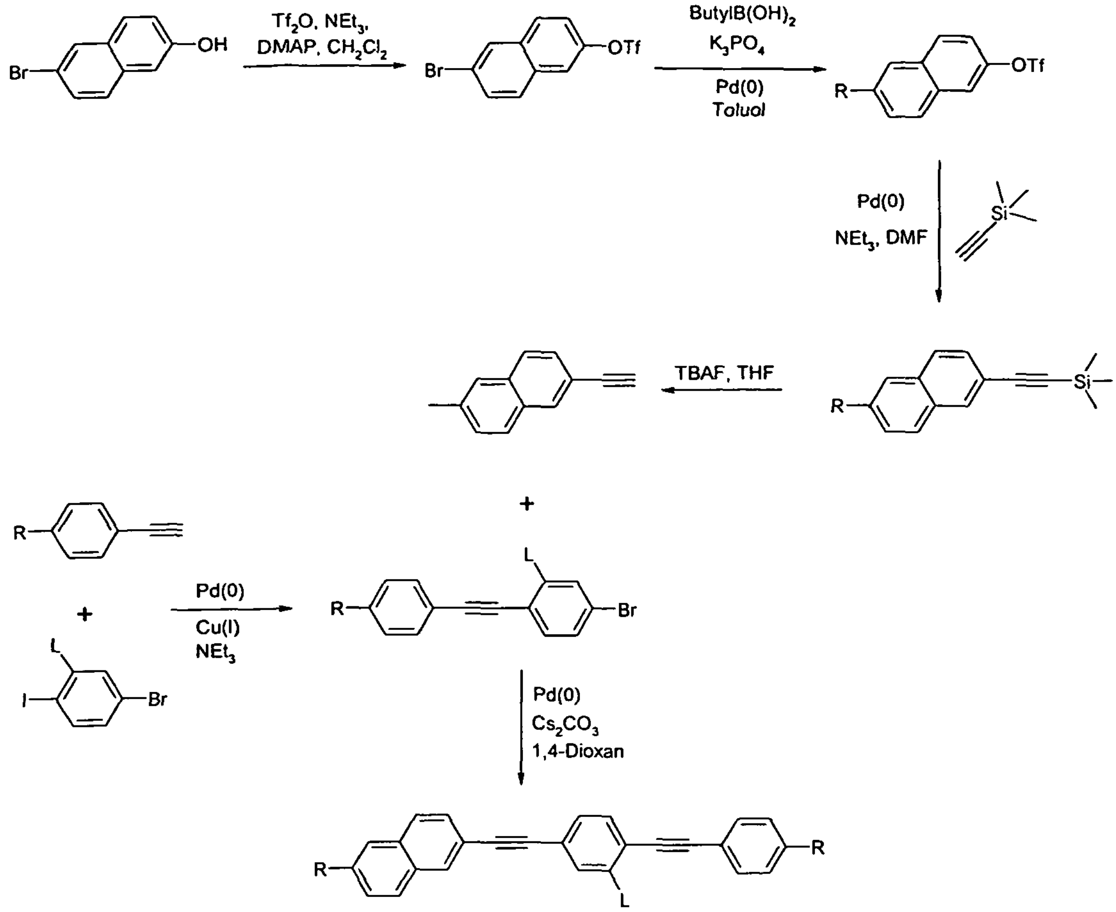


**Schema 1.**

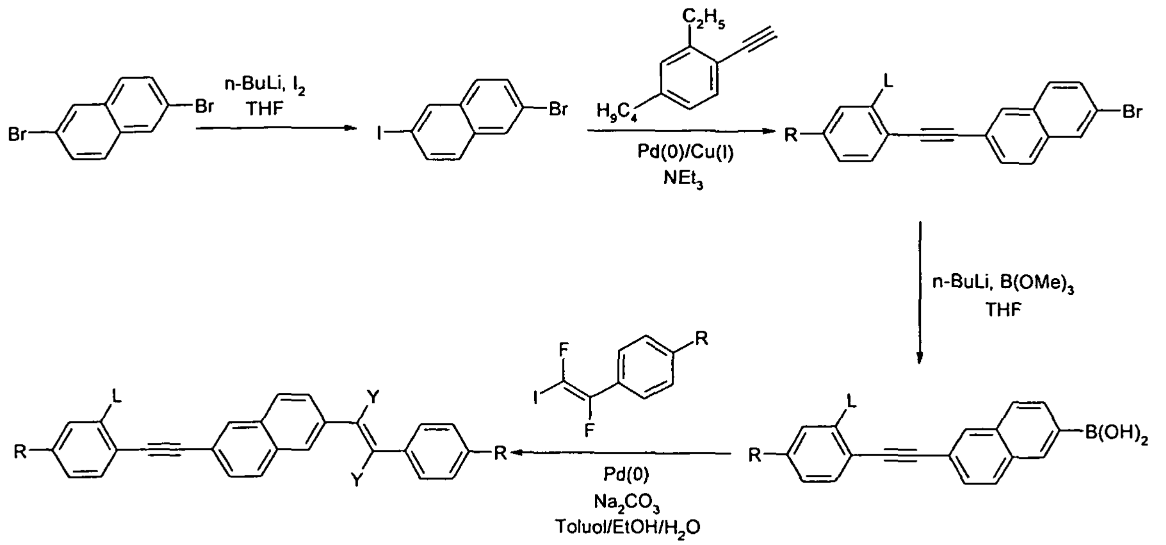


## Schema 2.

In Schema 1 und 2 wird die Synthese von bestimmten Verbindungen wiedergegeben. Die Reste "R" lassen sich dabei unabhängig auf beliebige Reste $-(Z^1-A^1)_m-R^1$ bzw. $-(Z^5-A^5)_n-R^2$ gemäß Formel I verallgemeinern. Ebenso lässt sich der mittlere Ring sinngemäß in seiner Bedeutung durch einen Rest $-[A^3]_p-$ gemäß Formel I erweitern. Der Substituent L kann ein oder mehrfach an verschiedenen Positionen vorhanden sein.

Die flüssigkristallinen Medien enthalten eine oder mehrere Verbindungen der Formel I und optional mindestens eine weitere, vorzugsweise mesogene Verbindung. Das Flüssigkristallmedium enthält daher bevorzugt zwei oder mehr Verbindungen, die vorzugsweise flüssigkristallin sind. Bevorzugte Medien umfassen die bevorzugten Verbindungen der Formel I.

Weitere Komponenten der flüssigkristallinen Medien sind ausgewählt aus den Verbindungen der Formel II:

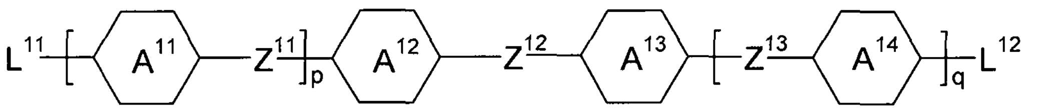 II

worin

$L^{11}$ $R^{11}$ oder $X^{11}$,

$L^{12}$ $R^{12}$ oder $X^{12}$,

$R^{11}$ und $R^{12}$ unabhängig voneinander unfluoriertes Alkyl oder unfluoriertes Alkoxy mit 1 bis 17, bevorzugt mit 3 bis 10, C-Atomen oder unfluoriertes Alkenyl, unfluoriertes Alkinyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl bedeuten,

$X^{11}$ und $X^{12}$ unabhängig voneinander F, Cl, Br, -CN, -NCS, -SCN, $-SF_5$, fluoriertes Alkyl oder fluoriertes Alkoxy mit 1 bis 7 C-Atomen oder fluoriertes Alkenyl, fluoriertes Alkenyloxy oder fluoriertes Alkoxyalkyl mit 2 bis 7 C-Atomen, vorzugsweise fluoriertes Alkoxy, fluoriertes Alkenyloxy, F oder Cl bedeuten,

p, q unabhängig 0 oder 1,

$Z^{11}$ bis $Z^{13}$ unabhängig voneinander *trans-* -CH=CH-, *trans-*-CF=CF-, -C=C- oder eine Einfachbindung bedeuten, und

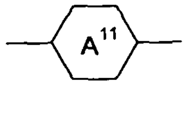 bis 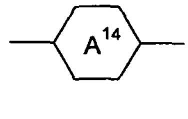

unabhängig voneinander

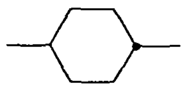, 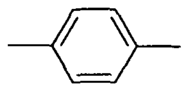, 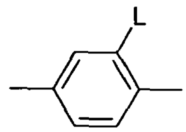,

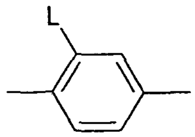, 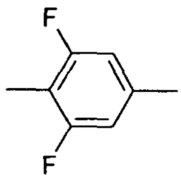, 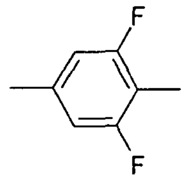,

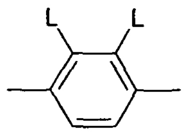,

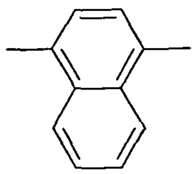, 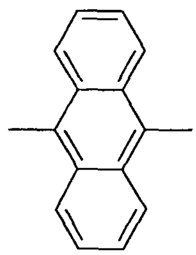 oder 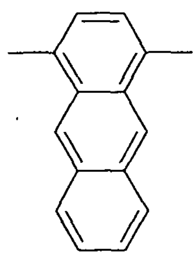

worin L unabhängig verzweigtes oder unverzweigtes Alkyl, Alkenyl oder Alkinyl mit 1 bis 12 C-Atomen, worin unabhängig voneinander auch eine oder mehrere "$-CH_2-$"-Gruppen durch O ersetzt sein können, $C_3$-$C_6$ Cycloalkyl, $C_3$-$C_6$ Cycloalkenyl, fluoriertes Alkyl oder Alkenyl, fluoriertes Alkyloxy oder Alkenyloxy, F, Cl, Br, CN, NCS, SCN oder $SF_5$, bedeutet, bedeuten.

In einer Ausführungsform der vorliegenden Erfindung enthalten die flüssigkristallinen Medien eine oder mehrere Verbindungen der Formel I und eine oder mehrere Verbindungen der Formel II.

Bevorzugt enthalten die flüssigkristallinen Medien gemäß der vorliegenden Anmeldung insgesamt 5 bis 95 %, bevorzugt 10 bis 90 % und besonders bevorzugt 15 bis 80 %, an Verbindungen der Formel I.

Vorzugsweise enthalten die flüssigkristallinen Medien gemäß der vorliegenden Erfindung Verbindungen ausgewählt aus der Gruppe der Verbindungen der Formeln I und II, stärker bevorzugt bestehen sie überwiegend, noch stärker bevorzugt bestehen sie im Wesentlichen und ganz bevorzugt bestehen sie vollständig daraus.

In dieser Anmeldung bedeutet "enthalten" im Zusammenhang mit Zusammensetzungen, dass die betreffende Entität, d.h. das Medium oder die Komponente, die angegebene Komponente oder Komponenten oder Verbindung oder Verbindungen enthält, vorzugsweise in einer Gesamtkonzentration von 10 % oder mehr und ganz bevorzugt von 20 % oder mehr.

"Überwiegend bestehen" bedeutet in diesem Zusammenhang, dass die betreffende Entität 55 % oder mehr, vorzugsweise 60 % oder mehr und ganz bevorzugt 70 % oder mehr der angegebenen Komponente oder Komponenten oder Verbindung oder Verbindungen enthält.

"Im Wesentlichen" bestehen bedeutet in diesem Zusammenhang, dass die betreffende Entität 80 % oder mehr, vorzugsweise 90 % oder mehr und ganz bevorzugt 95 % oder mehr der angegebenen Komponente oder Komponenten oder Verbindung oder Verbindungen enthält.

"Vollständig bestehen" bedeutet in diesem Zusammenhang, dass die betreffende Entität 98 % oder mehr, vorzugsweise 99 % oder mehr und ganz bevorzugt 100,0 % der angegebenen Komponente oder Komponenten oder Verbindung oder Verbindungen enthält.

Bevorzugt enthalten die flüssigkristallinen Medien gemäß der vorliegenden Anmeldung insgesamt 10 bis 100 %, bevorzugt 20 bis 95 % und besonders bevorzugt 25 bis 90 %, an Verbindungen der Formel I und II.

Gemäß der vorliegenden Erfindung werden die Verbindungen der Formel II vorzugsweise in einer Gesamtkonzentration von 10 % bis 90 %, stärker bevorzugt von 15 % bis 85 %, noch stärker bevorzugt von 25 % bis 80 % und ganz bevorzugt von 30 % bis 75 % der Gesamtmischung verwendet.

Die flüssigkristallinen Medien können darüber hinaus weitere Zusätze wie Stabilisatoren, chirale Dotierstoffe und Nanopartikel enthalten. Die einzelnen, zugesetzten Verbindungen werden in Konzentrationen von 0,005 bis 6 %, vorzugsweise von 0,1 bis 3 %, eingesetzt. Die Gesamtkonzentration dieser weiteren Bestandteile liegt im Bereich von 0 % bis 10 %, vorzugsweise 0,1 % bis 6 %, bezogen auf die Gesamtmischung. Dabei werden jedoch die Konzentrationsangaben der übrigen Bestandteile der Flüssigkristallmischungen, also der flüssigkristallinen oder mesogenen Verbindungen, ohne Berücksichtigung der Konzentration dieser Zusatzstoffe angegeben.

Vorzugsweise enthalten die flüssigkristallinen Medien 0 bis 10 Gew.%, insbesondere 0,01 bis 5 Gew.% und besonders bevorzugt 0,1 bis 3 Gew.% an Stabilisatoren. Vorzugsweise enthalten die Medien einen oder mehrere Stabilisatoren ausgewählt aus 2,6-Di-tert-butylphenolen, 2,2,6,6-Tetramethylpiperidinen oder 2-Benzotriazol-2-yl-phenolen. Diese Hilfsstoffe sind dem Fachmann bekannt und kommerziell erhältlich, z. B. als Lichtschutzmittel.

Offenbart wird daher auch ein Verfahren zur Herstellung eines Flüssigkristallmediums, das dadurch gekennzeichnet ist, dass eine oder mehrere Verbindungen der Formel I mit einer oder mehreren weiteren Verbindungen und optional mit einem oder mehreren Additiven gemischt wird. Die weiteren Verbindungen sind vorzugsweise ausgewählt aus den Verbindungen der Formel II, wie oben angegeben, und optional einer oder mehreren weiteren Verbindungen.

In der vorliegenden Anmeldung beschreibt der Ausdruck dielektrisch positiv Verbindungen oder Komponenten mit $\Delta\varepsilon > 3{,}0$, dielektrisch neutral mit $-1{,}5 \leq \Delta\varepsilon \leq 3{,}0$ und dielektrisch negativ mit $\Delta\varepsilon < -1{,}5$. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homeotroper als auch mit homogener Orientierung bestimmt. Die Schichtdicke beträgt bei beiden Zelltypen ca. 20 µm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

$\Delta\varepsilon$ ist als $(\varepsilon\| - \varepsilon\perp)$ definiert, während $\varepsilon_{Durchschnitt}$ $(\varepsilon\| + 2\ \varepsilon\perp) / 3$ ist.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20°C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast ($V_{10}$) angegeben, der Ausdruck Sättigungsspannung bezeichnet die optische Sättigung und ist für 90 % relativen Kontrast ($V_{90}$) angegeben, in beiden Fällen, soweit nicht ausdrücklich etwas anderes angegeben ist. Die kapazitive Schwellenspannung ($V_0$), auch Freedericks-Schwelle $V_{Fr}$ genannt, wird nur verwendet, wenn dies ausdrücklich genannt ist

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle für Flüssigkristalle typischen physikalischen Eigenschaften werden nach "Merck Liquid Crystals, Physical Properties of Liquid Crystals", Stand Nov. 1997, Merck KGaA, Deutschland, bestimmt und sind für eine Temperatur von 20°C aufgeführt, wenn nicht ausdrücklich anders angegeben. Die optische Anisotropie ($\Delta n$) wird bei einer Wellenlänge von 589,3 nm bestimmt. Die dielektrische Anisotropie ($\Delta\varepsilon$) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung von $\Delta\varepsilon$ besitzen eine Schichtdicke von circa 20 µm. Bei der Elektrode handelt es sich um eine kreisförmige ITO-Elektrode mit einer Fläche von 1,13 $cm^2$ und einem Schutzring. Die Ausrichtungsschichten sind SE-1211 von Nissan Chemicals, Japan, für homeotrope Ausrichtung ($\varepsilon\|$) und Polyimid AL-1054 von Japan Synthetic Rubber, Japan, für homogene Ausrichtung ($\varepsilon\perp$). Die Bestimmung der Kapazitäten erfolgt mit einem Frequenzgang-Analysegerät Solatron 1260 unter Verwendung einer Sinuswelle mit einer Spannung von 0,3 $V_{rms}$. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen werden unter senkrechter Beobachtung bestimmt. Die Schwellenspannung ($V_{10}$), "Mittgrau-Spannung" ($V_{50}$) und Sättigungss-

pannung ($V_{90}$) werden für 10 %, 50 % bzw. 90 % relativen Kontrast bestimmt.

Die flüssigkristallinen Medien werden bezüglich ihrer Eigenschaften im Frequenzbereich der Mikrowellen untersucht wie in A. Penirschke et al. "Cavity Perturbation Method for Characterization of Liquid Crystals up to 35GHz", 34th European Microwave Conference - Amsterdam, S. 545-548 beschreiben. Vergleiche hierzu auch A. Gaebler et al. "Direct Simulation of Material Permittivites ... ", 12MTC 2009 - International Instrumentation and Measurement Technology Conference, Singapur, 2009 (IEEE), S. 463-467 und DE 10 2004 029 429 A, in der ebenfalls detailliert ein Messverfahren beschrieben wird.

Der Flüssigkristall wird in eine Kapillare aus Polytetrafuorethylen (PTFE) oder Quarzglas gefüllt. Die Kapillare hat einen inneren Radius von 180 $\mu$m und einen äußeren Radius von 350 $\mu$m. Die effektive Länge beträgt 2,0 cm. Die gefüllte Kapillare wird in die Mitte der zylindrischen Kavität mit einer Resonanzfrequenz von 19 GHz eingebracht. Diese Kavität hat eine Länge von 11,5 mm und einen Radius von 6 mm. Daraufhin wird das Eingangssignal ("source") angelegt und das Ergebnis des Ausgangssignals mit einem kommerziellen Netzwerkanalysator ("vector network analyzer") aufgenommen. Für andere Frequenzen werden die Abmessungen der Kavität entsprechend angepasst.

Aus der Änderung der Resonanzfrequenz und des Q-Faktors, zwischen der Messung mit der mit dem Flüssigkristall gefüllten Kapillare und der Messung ohne der mit dem Flüssigkristall gefüllten Kapillare, wird die dielektrische Konstante und der Verlustwinkel bei der entsprechenden Zielfrequenz mittels der Gleichungen 10 und 11 der zuvor genannten Druckschrift A. Penirschke et al., 34th European Microwave Conference - Amsterdam, S. 545-548 bestimmt, wie dort beschrieben.

Die Werte für die Komponenten der Eigenschaften senkrecht bzw. and parallel zum Direktor des Flüssigkristalls werden durch Orientierung des Flüssigkristalls in einem Magnetfeld erhalten. Dazu wird das Magnetfeld eines Permanentmagneten verwendet. Die Stärke des Magnetfelds beträgt 0,35 Tesla. Die Orientierung des Magneten wird entsprechend eingestellt und dann entsprechend um 90° gedreht.

Die dielektrische Anisotropie im $\mu$-Wellenbereich ist definiert als

$$\Delta\varepsilon_r \equiv (\varepsilon_{r,||} - \varepsilon_{r,\perp}) \;.$$

Die Modulierbarkeit bzw. Steuerbarkeit ("tuneability", $\tau$) ist definiert als

$$\tau \equiv (\Delta\varepsilon_r / \varepsilon_{r,||}) \;.$$

Die Materialgüte ($\eta$) ist definiert als

$$\eta \equiv (\tau / \tan \delta_{\varepsilon\, r,Max.}) \;,$$

mit dem maximalen dielektrischen Verlustfaktor tan $\delta_{\varepsilon\, r,Max}$:

$$\tan \delta_{\varepsilon\, r,Max.} \equiv Max.\, \{ \tan \delta_{\varepsilon\, r,\perp};\ \tan \delta_{\varepsilon\, r,||} \}$$

der aus dem Maximalwert der gemessenen Werte für tan$\delta_{\varepsilon r}$ hervorgeht.

Die Materialgüte ($\eta$) der bevorzugten Flüssigkristallmaterialien beträgt 6 oder mehr, bevorzugt 7 oder mehr, bevorzugt 10 oder mehr, bevorzugt 15 oder mehr, besonders bevorzugt 25 oder mehr und ganz besonders bevorzugt 30 oder mehr.

Die bevorzugten Flüssigkristallmaterialien haben in den entsprechenden Bauteilen Phasenschiebergüten von 15°/dB oder mehr, bevorzugt von 20°/dB oder mehr, bevorzugt von 30°/dB oder mehr, bevorzugt von 40°/dB oder mehr, bevorzugt von 50°/dB oder mehr, besonders bevorzugt von 80°/dB oder mehr und ganz besonders bevorzugt von 100°/dB oder mehr.

Die erfindungsgemäßen Flüssigkristallmedien weisen bevorzugt nematische Phasen von jeweils mindestens von -20°C bis 80°C, bevorzugt von -30°C bis 85°C und ganz besonders bevorzugt von -40°C bis 100°C auf. Insbesondere bevorzugt reicht die Phase bis 120°C oder mehr, bevorzugt bis 140°C oder mehr und ganz besonders bevorzugt bis 180°C oder mehr. Hierbei bedeutet der Begriff eine nematische Phase aufweisen einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen,

mit einer Schichtdicke von 5 μm, für mindestens 100 Stunden überprüft. Bei hohen Temperaturen wird der Klärpunkt nach üblichen Methoden in Kapillaren gemessen.

Die Flüssigkristallmedien gemäß der vorliegenden Erfindung weisen bevorzugt einen Klärpunkt von 90°C oder mehr, stärker bevorzugt von 100°C oder mehr, noch stärker bevorzugt von 120°C oder mehr, besonders bevorzugt von 150°C oder mehr und ganz besonders bevorzugt von 170°C oder mehr, auf.

Das $\Delta\varepsilon$ des Flüssigkristallmediums gemäß der Erfindung bei 1 kHz und 20°C beträgt vorzugsweise 1 oder mehr, stärker bevorzugt 2 oder mehr und ganz bevorzugt 3 oder mehr.

Das $\Delta n$ der Flüssigkristallmedien gemäß der vorliegenden Erfindung liegt bei 589 nm ($Na^D$) und 20°C vorzugsweise im Bereich von 0,20 oder mehr bis 0,90 oder weniger, stärker bevorzugt im Bereich von 0,25 oder mehr bis 0,90 oder weniger, noch stärker bevorzugt im Bereich von 0,30 oder mehr bis 0,85 oder weniger und ganz besonders bevorzugt im Bereich von 0,35 oder mehr bis 0,80 oder weniger.

In einer bevorzugten Ausführungsform der vorliegenden Anmeldung beträgt das $\Delta n$ der Flüssigkristallmedien gemäß der vorliegenden Erfindung vorzugsweise 0,50 oder mehr, stärker bevorzugt 0,55 oder mehr.

Ferner sind die erfindungsgemäßen Flüssigkristallmedien durch hohe Anisotropien im Mikrowellenbereich gekennzeichnet. Die Doppelbrechung beträgt z.B. bei ca. 8,3 GHz bevorzugt 0,14 oder mehr, besonders bevorzugt 0,15 oder mehr, besonders bevorzugt 0,20 oder mehr, besonders bevorzugt 0,25 oder mehr und ganz besonders bevorzugt 0,30 oder mehr. Außerdem beträgt die Doppelbrechung bevorzugt 0,80 oder weniger.

Die eingesetzten Flüssigkristalle sind entweder Einzelsubstanzen oder Mischungen. Bevorzugt weisen sie eine nematische Phase auf.

In der vorliegenden Anmeldung, bedeutet, wenn nicht ausdrücklich anders angegeben, der Begriff Verbindungen sowohl eine Verbindung, als auch mehrere Verbindungen.

Bevorzugte Bauelemente, die ein Flüssigkristallmedium oder wenigstens eine Verbindung gemäß der Erfindung enthalten, sind Phasenschieber, Varaktoren, Antennenarrays (z. B. für Funk, Mobilfunk, Radio, Mikrowellen/Radar und sonstige Datenübertragung), 'matching circuit adaptive filters' und andere. Bevorzugt sind Bauteile für die Hochfrequenztechnik, wie oben definiert. Bevorzugt sind außerdem durch unterschiedliche angelegte elektrische Spannungen modulierbare Bauteile. Ganz besonders bevorzugte Bauelemente sind abstimmbare Phasenschieber. In bevorzugten Ausführungsformen werden mehrere Phasenschieber funktionell verbunden, wodurch beispielsweise ein phasengesteuerte Gruppenantenne, in der Regel als 'phased array' Antenne bezeichnet, resultiert. Eine Gruppenantenne nutzt die Phasenverschiebung der in einer Matrix angeordneten Sende- oder Empfangselemente, um durch Interferenz eine Bündelung zu erzielen. Aus einer reihen- oder gitterförmigen parallelen Anordnung von Phasenschiebern lässt sich ein sog. 'phased array' aufbauen, das als abstimmbare oder passive Sende- oder Empfangsantenne für Hochfrequenzen (z. B. Gigahertzbereich) dienen kann. Erfindungsgemäße 'phased array'-Antennen besitzen einen sehr breiten nutzbaren Empfangskegel.

Bevorzugte Anwendungen sind Radarinstallationen und Datenübertragungsgeräte auf bemannten oder unbemannten Fahrzeugen aus dem Bereich Automobil, Schifffahrt, Flugzeuge, Raumfahrt und Satellitentechnik.

Zur Herstellung geeigneter Bauteile für die Hochfrequenztechnik, insbesondere geeigneter Phasenschieber, wird typischerweise ein erfindungsgemäßes flüssigkristallines Medium in rechteckige Kavitäten von weniger als 1 mm Dicke, mehreren mm Breite und mehreren Zentimetern Länge eingebracht. Die Kavitäten besitzen entlang zweier langer Seiten angebrachte, gegenüberliegende Elektroden. Solche Anordnungen sind dem Fachmann vertraut. Durch Anlegen einer variablen Spannung können beim Betreiben der Antenne die dielektrischen Eigenschaften des flüssigkristallinen Mediums abgestimmt werden, um verschiedene Frequenzen oder Richtungen einer Antenne einzustellen.

Der Ausdruck "Halogen" oder "halogeniert" steht für F, Cl, Br und I, besonders für F und Cl und insbesondere für F.

Der Ausdruck "Alkyl" umfasst vorzugsweise geradkettige und verzweigte Alkylgruppen mit 1 bis 15 Kohlenstoffatomen, insbesondere die geradkettigen Gruppen Methyl, Ethyl, Propyl, Butyl, Pentyl, Hexyl und Heptyl. Gruppen mit 2 bis 10 Kohlenstoffatomen sind im Allgemeinen bevorzugt.

Der Ausdruck "Alkenyl" umfasst vorzugsweise geradkettige und verzweigte Alkenylgruppen mit 2 bis 15 Kohlenstoffatomen, insbesondere die geradkettigen Gruppen. Besonders bevorzugte Alkenylgruppen sind $C_2$ bis $C_7$-1E-Alkenyl, $C_4$ bis $C_7$-3E-Alkenyl, $C_5$ bis $C_7$-4-Alkenyl, $C_6$ bis $C_7$-5-Alkenyl und $C_7$-6-Alkenyl, insbesondere $C_2$ bis $C_7$-1E-Alkenyl, $C_4$ bis $C_7$-3E-Alkenyl und $C_5$ bis $C_7$-4-Alkenyl. Beispiele weiterer bevorzugter Alkenylgruppen sind Vinyl, 1 E-Propenyl, 1 E-Butenyl, 1 E-Pentenyl, 1 E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Alkoxy" umfasst vorzugsweise geradkettige Reste der Formel $C_nH_{2n+1}$-O-, worin n 1 bis 10 bedeuten. Vorzugsweise ist n 1 bis 6. Bevorzugte Alkoxygruppen sind beispielsweise Methoxy, Ethoxy, n-Propoxy, n-Butoxy, n-Pentoxy, n-Hexoxy, n-Heptoxy, n-Octoxy, n-Nonoxy, n-Decoxy.

Der Ausdruck "Oxaalkyl" bzw. "Alkoxyalkyl" umfasst vorzugsweise geradkettige Reste der Formel $C_nH_{2n+1}$-O-$(CH_2)_m$, worin n und m jeweils unabhängig voneinander 1 bis 10 bedeuten. Vorzugsweise ist n 1 und m 1 bis 6.

Der Ausdruck "fluorierter Alkylrest" umfasst vorzugsweise ein- oder mehrfach fluorierte Reste. Perfluorierte Reste sind eingeschlossen. Besonders bevorzugt sind $CF_3$, $CH_2CF_3$, $CH_2CHF_2$, $CHF_2$, $CH_2F$, $CHFCF_3$ und $CF_2CHFCF_3$.

Der Ausdruck "fluorierter Alkoxyrest" umfasst ein- oder mehrfach fluorierte Reste. Perfluorierte Reste sind bevorzugt. Besonders bevorzugt ist der Rest $OCF_3$.

Der Ausdruck "substituiertes Cycloalkyl" umfasst ein- oder mehrfach durch Alkyl substituiertes Cycloalkyl, insbesondere Alkyl mit 1 bis 8 Kohlenstoffatomen.

Der Ausdruck "substituiertes Phenyl" umfasst ein- oder mehrfach durch eine Gruppe wie $R^1$ definiert substituiertes Phenyl, insbesondere durch F, Cl, Alkyl oder Alkoxy substituiertes Phenyl.

Der Ausdruck "Alk(en/in)ylgruppen, worin ein oder mehrere "-$CH_2$-"-Gruppen durch -O- ersetzt sein können" bezieht sich vorzugsweise auf solche Gruppen, worin eine nicht-terminale $CH_2$-Gruppe ersetzt wird. OH-Gruppen sind in der allgemeinen Bedeutung mit umfasst.

In der vorliegenden Anmeldung bedeutet Hochfrequenztechnik Anwendungen mit Frequenzen im Bereich von 1 MHz bis 10 THz, bevorzugt von 1 GHz bis 3 THz, stärker bevorzugt 2 GHz bis 1 THz, insbesondere bevorzugt von 5 bis 300 GHz. Die Anwendung liegt bevorzugt im Mikrowellenspektrum oder angrenzenden, für die Nachrichtenübertragung geeigneten Bereichen, in denen 'phased array'-. Module in Sende- und Empfangsantennen zum Einsatz kommen können.

Die erfindungsgemäßen Flüssigkristallmedien bestehen aus einer oder mehreren Verbindungen, vorzugsweise aus 2 bis 30, stärker bevorzugt aus 3 bis 20 und ganz bevorzugt aus 3 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste $C_nH_{2n+1}$ und $C_mH_{2m+1}$ sind geradkettige Alkylreste mit n bzw. m C-Atomen; n, m und k sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt von Akronym für den Grundkörper mit einem Strich ein Code für die Substituenten $R^{1*}$, $R^{2*}$, $L^{1*}$ und $L^{2*}$:

| Code für $R^{1*}$, $R^{2*}$, $L^{1*}$, $L^{2*}$, $L^{3*}$ | $R^{1*}$ | $R^{2*}$ | $L^{1*}$ | $L^{2*}$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH2_{n+1}$ | CN | H | H |
| nN.F | $C_nH_{2n+1}$ | CN | F | H |
| nN.F.F | $C_nH_{2n+1}$ | CN | F | F |
| nF | $C_nH_{2n+1}$ | F | H | H |
| nCl | $C_nH_{2n+1}$ | Cl | H | H |
| nOF | $OC_nH_{2n+1}$ | F | H | H |
| nF.F | $C_nH_{2n+1}$ | F | F | H |
| nF.F.F | $C_nH_{2n+1}$ | F | F | F |
| $nOCF_3$ | $C_nH_{2n+1}$ | $OCF_3$ | H | H |
| $nOCF_3$.F | $C_nH_{2n+1}$ | $OCF_3$ | F | H |
| n-Vm | $C_nH_{2n+1}$ | $-CH=CH-C_mH_{2m+1}$ | H | H |
| nV-Vm | $C_nH_{2n+1}-CH=CH-$ | $-CH=CH-C_mH_{2m+1}$ | H | H |

Geeignete Mischungskomponenten finden sich in den Tabellen A und B.

**Tabelle A**

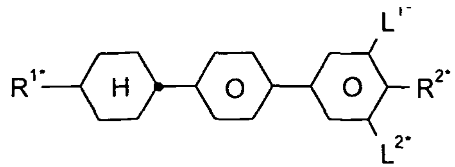

BCH

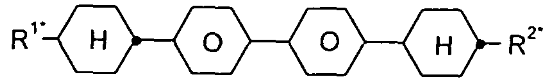

CBC

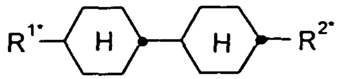

CCH

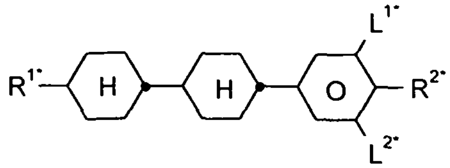

CCP

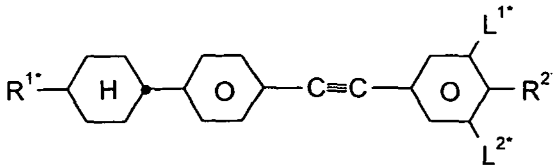

CPTP

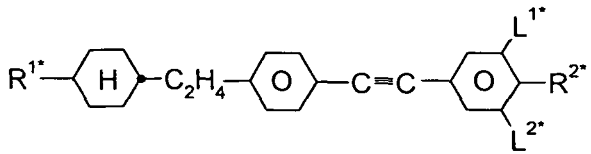

CEPTP

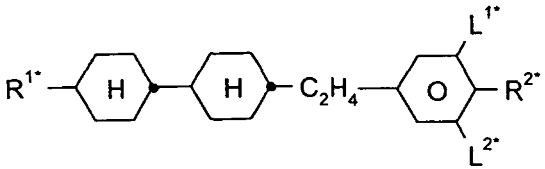

ECCP

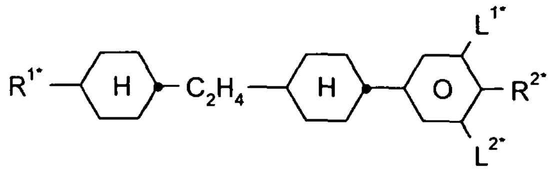

CECP

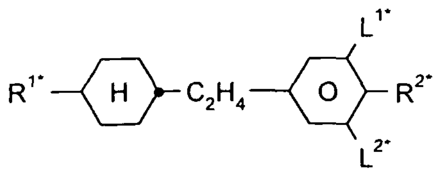

EPCH

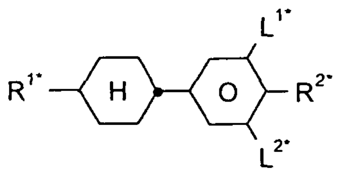

PCH

(fortgesetzt)

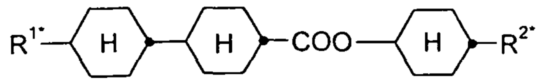

**CH**

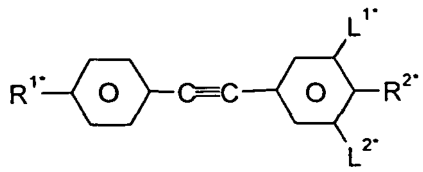

**PTP**

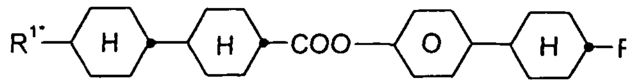

**CCPC**

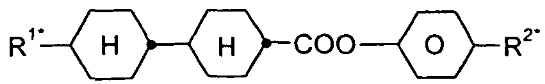

**CP**

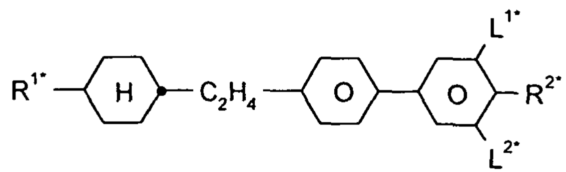

**BECH**

**Tabelle B**

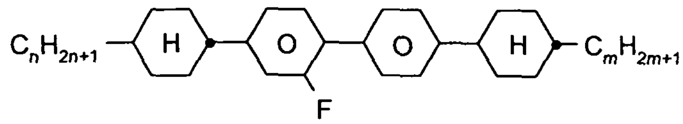

**CBC-nmF**

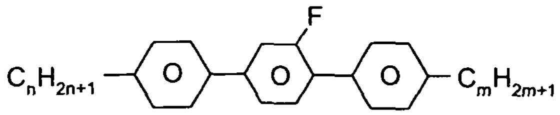

**PGP-n-m**

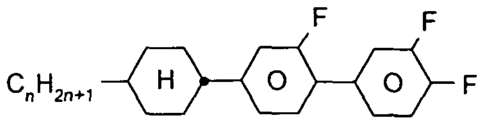

**CGG-n-F**

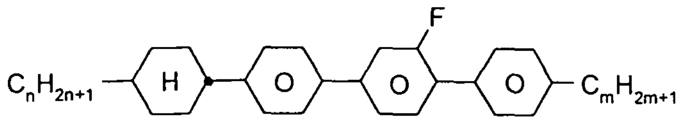

**CPGP-n-m**

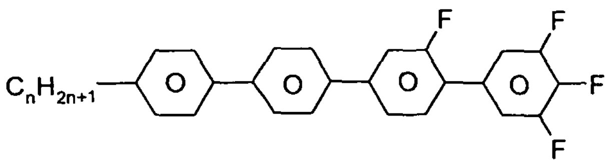

**PPGU-n-F**

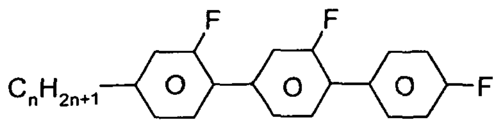

**GGP-n-F**

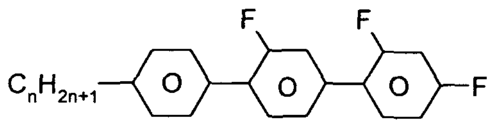

**PGIGI-n-F**

Die folgenden Beispiele erläutern die vorliegende Erfindung, ohne sie in irgendeiner Weise zu beschränken.

Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

In der vorliegenden Anmeldung, bedeutet, wenn nicht ausdrücklich anders die Pluralform eines Begriffs sowohl die Singularform als auch die Pluralform, und umgekehrt. Weitere Kombinationen der Ausführungsformen und Varianten der Erfindung gemäß der Beschreibung ergeben sich auch aus den angefügten Ansprüchen.

Verwendete Abkürzungen:

| | |
|---|---|
| MTB | Methyl-tert-butylether |
| $SiO_2$ | Kieselgel |
| RT | Raumtemperatur (ca. 20 °C) |

**Beispiele**

Die eingesetzten Acetylene und Boronsäuren sind kommerziell erhältlich oder können in Analogie zu bekannten Synthesen hergestellt werden, die dem Fachmann bekannt sind. Die Reste "$C_4H_9$" stehen für unverzweigte n-Butylreste. Entsprechendes gilt für $C_3H_7$, $C_6H_{13}$, etc.. Der Baustein 1,1,2-Trifluortriethylsilylethen wird synthetisiert nach: F. Babudri,

et al., Eur. J. Org. Chem. 2008, 1977-1982. Seine Verwendung zur Herstellung von trans-1,2-Difluorethyl-1-iod-2-arylbausteinen wird beschrieben in: Babudri et al., Synthesis 2008, 1580-1588.

Synthesebeispiel 1:

1.1 Synthese von 1-Brom-3-ethyl-4-(4-n-butyl-phenylethynyl)-benzol

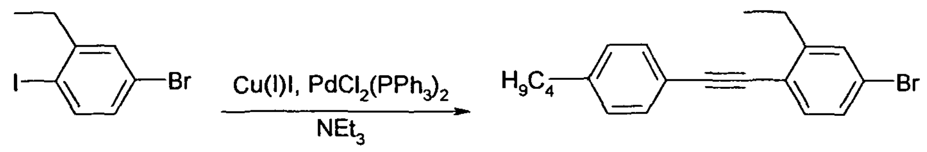


20 g (64,3 mmol) 1-Iod-2-ethyl-4-Brombenzol und 12 g (64,3 mmol) 4-n-Hexylphenylacetylen werden in 300 mL Triethylamin vorgelegt, mit 250 mg (1,3 mmol) Kupfer(I)iodid und 900 mg (1,3 mmol) Bis(triphenylphosphin)-palladium(II)-chlorid versetzt, 3h bei RT gerührt und anschließend 1 h refluxiert.

Der Ansatz wird abgekühlt, mit Wasser und Heptan versetzt und die Phasen getrennt. Die organische Phase wird mit gesättigter Natriumchloridlsg. gewaschen, über Natriumsulfat getrocknet, abfiltriert und am Rotationsverdampfer eingeengt. Der Rückstand wird säulenchromatographisch ($SiO_2$, Heptan) gereinigt; das Produkt wird als farbloses Öl erhalten.

1.2 Synthese von 2-Brom-6-trifluormethansulfonyl-naphthalin

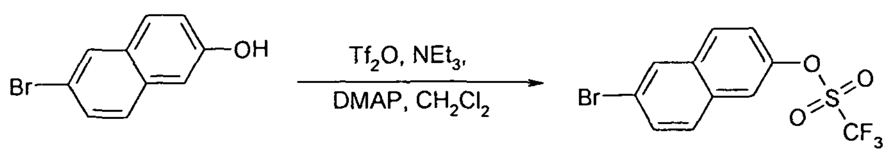


25 g (112 mmol) 6-Brom-2-naphthol, 21,1 ml (157 mmol) Triethylamin und 266 mg 4-Dimethylamino-pyridin werden in 300 ml Dichlormethan vorgelegt, im Eisbad gekühlt und tropfenweise mit 20 ml (123 mmol) Trifluormethansulfonsäureanhydrid versetzt. Der Ansatz wird über Nacht gerührt und dabei bis auf RT erwärmt.

Anschließend wird vorsichtig mit Wasser versetzt und die Phasen getrennt. Die organische Phase wird mit gesättigter Natriumchloridlsg. gewaschen, über Natriumsulfat getrocknet, abfiltriert und am Rotationsverdampfer eingeengt. Der Rückstand wird säulenchromatographisch ($SiO_2$, Heptan/Dichlormethan = 1:1) gereinigt; das Produkt wird als farbloses Öl erhalten.

1.3 Synthese von 6-Butyl-2-trifluormethansulfonyl-naphthalin

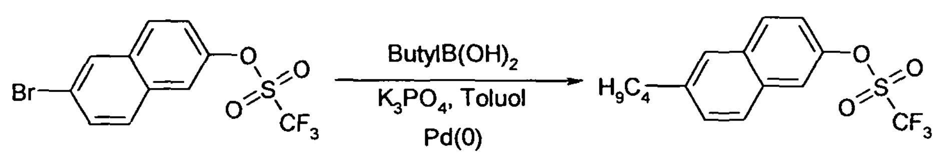


39,1 g (110 mmol) Triflat und 13,5 g (132 mmol) Boronsäure werden 16h mit 48,8 g (223 mmol) Kaliumphosphat, 633 mg (1,1 mmol) Bis(dibenzylidenaceton)palladium(0) und 1,65 g (2,2 mmol) 1,2,3,4,5-Pentaphenyl-1-di-tertiär-butylphosphino)-ferrocen in 875 ml Toluol refluxiert.

Der Ansatz wird abgekühlt, mit Wasser versetzt und die Phasen getrennt. Die wässrige Phase wird mit Toluol extrahiert, die vereinigten organischen Phasen werden mit gesättigter Natriumchloridlösung gewaschen, über Natriumsulfat getrocknet, abfiltriert und am Rotationsverdampfer eingeengt. Der Rückstand wird säulenchromatographisch ($SiO_2$, Heptan/MTB =9:1) gereinigt, die weitere Aufreinigung erfolgt durch Umkristallisation aus Ethanol.

1.4 Synthese von 6-Butyl-2-(trimethylsilylacetylenyl)-naphthalin

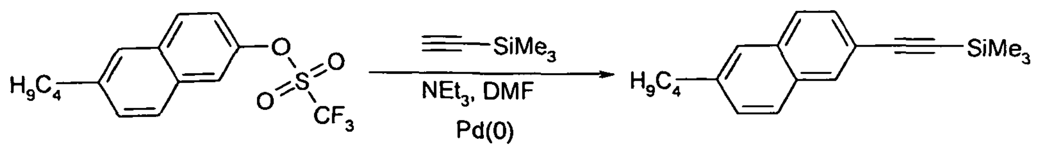


32,5 g (~ 84 mmol) Triflat und 35,4 ml (252 mmol) Acetylen werden 16h mit 29,1 ml (210 mmol) Triethylamin und 2,95 g (4,2 mmol) Bis(triphenyl-phosphin)palladium(II)-chlorid in 130 ml Dimethylformamid refluxiert. Der Ansatz wird abgekühlt, mit Wasser versetzt und mit MTB extrahiert. Die organische Phase wird mit gesättigter Natriumchloridlösung gewaschen, über Natriumsulfat getrocknet, abfiltriert und am Rotationsverdampfer eingeengt. Der Rückstand wird ohne weitere Aufreinigung in der nächsten Reaktion eingesetzt.

1.5 Synthese von 6-Butyl-2-acetylenyl-naphthalin

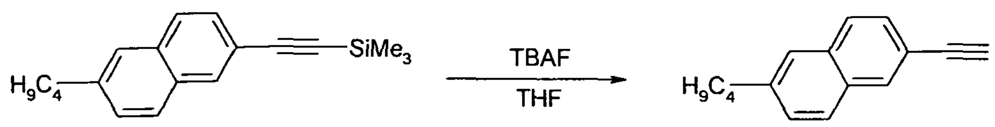


39,7 g (~ 85 mmol) silylgeschütztes Acetylen werden in 250 ml Tetrahydrofuran vorgelegt und mit 26,6 g (102 mmol) Tetra-n-butylammoniumfluorid versetzt.

Nach 16 h bei RT wird der Ansatz mit Wasser und MTB versetzt und die Phasen getrennt. Die wässrige Phase wird mit MTB extrahiert, die vereinigten organischen Phasen werden mit gesättigter Natriumchloridlösung gewaschen, über Natriumsulfat getrocknet, abfiltriert und am Rotationsverdampfer eingeengt. Der Rückstand wird säulenchromatographisch ($SiO_2$, Heptan) gereinigt, die weitere Aufreinigung erfolgt durch Umkristallisation aus Ethanol.

1.6 Synthese von 1-(6-n-Butyl-2-naphtylethynyl)-3-ethyl-4-(4-n-Hexyl-phenylethynyl)-benzol

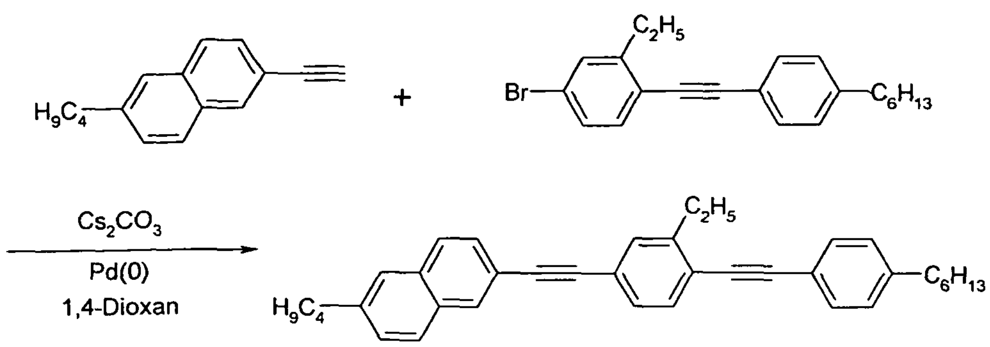


5,5 g (26,4 mmol) Acetylen und 9,75 g (26,4 mmol) Bromid werden mit 69 mg (264 μmol) Bis-(acetonitril)-palladium(II)-chlorid, 378 mg (792 μmol) 2-Dicyclohexylphosphino-2',4',6'-triisopropylbiphenyl und 18,9 g Cäsiumcarbonat (58 mmol) in 79 ml 1,4-Dioxan versetzt.

Der Ansatz wird 16 h bei 100 °C gerührt, abgekühlt, mit Wasser und MTB versetzt und die Phasen getrennt. Die wässrige Phase wird mit MTB extrahiert, die vereinigten organischen Phasen werden mit gesättigter Natriumchloridlösung gewaschen, über Natriumsulfat getrocknet, abfiltriert und am Rotationsverdampfer eingeengt. Der Rückstand wird säulenchromatographisch ($SiO_2$, Heptan) gereinigt, die weitere Aufreinigung erfolgt durch Umkristallisation aus Isopropanol.

**MS (EI):** m/z(%) = 496 (100, $M^+$), 453 (11, $[M - Propyl]^+$).

$\Delta\varepsilon$=+1,7

$\Delta n$ = 0,45
K 79 N 178 I

Synthesebeispiel 2:

2.1 Synthese von 2-Iod-6-Bromnaphthalin

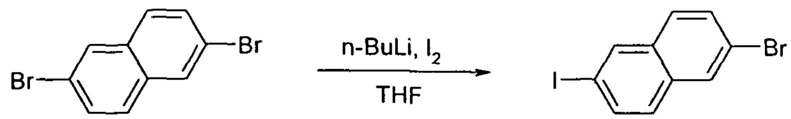


46,8 g (164 mmol) 2,6-Dibromnaphthalin werden in 400 ml THF vorgelegt, auf -70 °C gekühlt und tropfenweise mit 110 mL n-BuLi (1,6M in Hexan, 175 mmol) versetzt. Nach 1h werden 47 g Iod (185 mmol) in 100 mL THF zugetropft, 2h bei -70 °C nachgerührt, bis auf -30 °C erwärmt und durch die Zugabe von 30 mL (386 mmol) wässriger NatriumhydrogensulfitLösung (w = 39 %) gequencht.

Die Phasen werden getrennt und die wässrige Phase 1x mit MTB extrahiert. Die vereinigten organischen Phasen werden mit gesättigter Natriumchloridlsg. gewaschen, über Natriumsulfat getrocknet, abfiltriert und am Rotationsverdampfer eingeengt. Die weitere Aufreinigung des Rückstandes erfolgt durch Umkristallisation aus Heptan/Toluol = 2:1.

2-Iod-6-Bromnaphthalin wird als gelber Feststoff erhalten.

2.2 Synthese von 2-Brom-6-(2-ethyl-4-n-butyl-phenylethynyl)-naphthalin

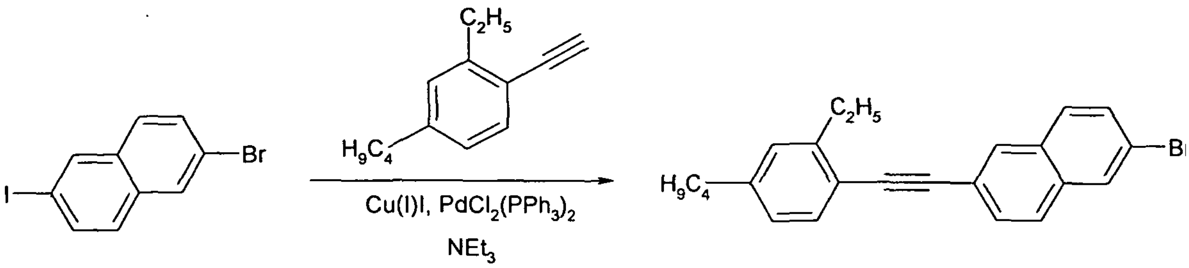


16 g (48 mmol) 2-Iod-6-Bromnaphthalin und 10 g (48 mmol) 2-Ethyl-4-n-butyl-phenylacetylen werden in 250 mL Triethylamin vorgelegt, mit 200 mg (1 mmol) Kupfer(I)iodid und 720 mg (1 mmol) Bis(triphenylphosphin)-palladium(II)-chlorid versetzt und 16 h refluxiert.

Der Ansatz wird abgekühlt, mit Wasser und MTB versetzt und die Phasen getrennt. Die organische Phase wird mit gesättigter Natriumchloridlsg. gewaschen, über Natriumsulfat getrocknet, abfiltriert und am Rotationsverdampfer eingeengt. Der Rückstand wird säulenchromatographisch ($SiO_2$, Heptan) gereinigt.

2.3 Synthese von 2-(2-Ethyl-4-n-butyl-phenylethynyl)-naphthalin-6-boronsäure

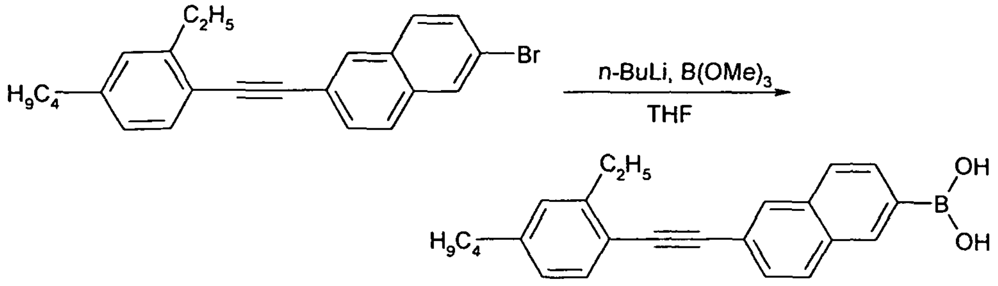


7 g (17,8 mmol) Bromid werden in 50 ml THF vorgelegt, auf -70 °C gekühlt und tropfenweise mit 12,5 mL n-BuLi (1,6M in Hexan, 19,9 mmol) versetzt. Nach 30 Minuten werden 2,3 ml Trimethylborat (20,2 mmol) zugetropft, weitere 30 Minuten bei -70 °C nachgerührt, bis auf 0 °C erwärmt und durch die Zugabe von Wasser hydrolysiert.

Der Ansatz mit verdünnter Salzsäure angesäuert und zweimal mit MTB extrahiert. Die vereinigten organischen Phasen werden mit gesättigter Natriumchloridlsg. gewaschen, über Natriumsulfat getrocknet, abfiltriert und am Rotationsverdampfer eingeengt. Die weitere Aufreinigung des Rückstandes erfolgt durch Umkristallisation aus Heptan.

2.4 Synthese von 2-(2-Ethyl-4-n-butyl-phenylethynyl)-6-[E-1,2-Difluor-2-(4-n-butyl-phenyl)-ethylenyl]-naphthalin

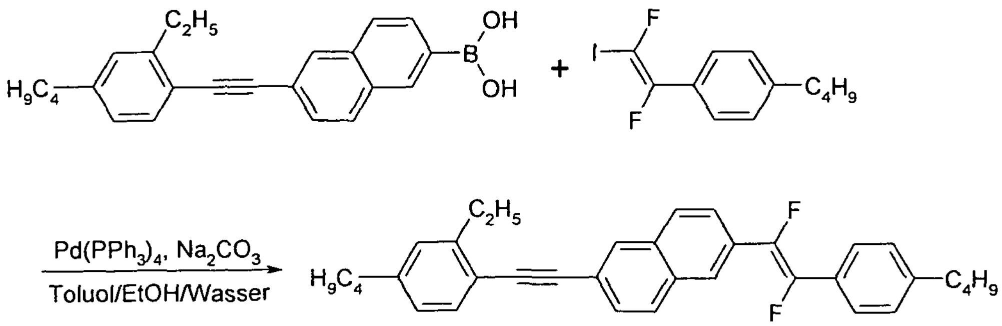


4,9 g (13,8 mmol) Boronsäure und 6,5 g (18,4 mmol) Iodid werden in 35 ml Toluol vorgelegt und mit 4,3 g (40,6 mmol) Natriumcarbonat in 6,5 ml Wasser und 22 ml Ethanol versetzt, bevor 780 mg (6,75 μmol) Tetrakis-(triphenylphosphin)-palladium(0) zugesetzt werden. Der Ansatz wird 16h refluxiert, abgekühlt und die Phasen getrennt.

Die wässrige Phase wird mit MTB extrahiert, die vereinigten organischen Phasen werden mit gesättigter Natriumchloridlösung gewaschen, über Natriumsulfat getrocknet, abfiltriert und am Rotationsverdampfer eingeengt. Der Rückstand wird säulenchromatographisch ($SiO_2$, Heptan) gereinigt, die weitere Aufreinigung erfolgt durch Umkristallisation aus Isopropanol.

**MS (EI):** m/z (%) = 506 (100, $M^+$), 463 (15, $[M - Propyl]^+$), 210 (17, $[M - 2x Propyl]^{2+}$).

$\Delta\varepsilon = +2,4$

$\Delta n = 0,46$

$\gamma_1$ =2213mPa·s

K 72 N 235 I

Analog wie in Beispiel 1 und/oder 3 beschrieben werden synthetisiert:

3) 1-(6-n-Butyl-2-naphtylethynyl)-2-ethyl-4-(4-n-Hexyl-phenylethynyl)-benzol

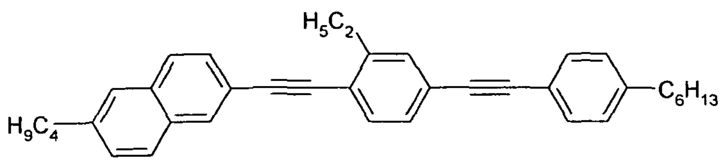

**MS (EI):** m/z (%) = 496 (100, $M^+$), 425 (11, $[M - Pentyl]^+$).
$\Delta\varepsilon$ = +2,0
$\Delta n$ = 0,45
$\gamma_1$ = 8846 mPa·s
K 58 N 178 I

4) 2-(2-Ethyl-4-n-butyl-phenylethynyl-6-(4-n-butyl-phenylethynyl)-naphthalin

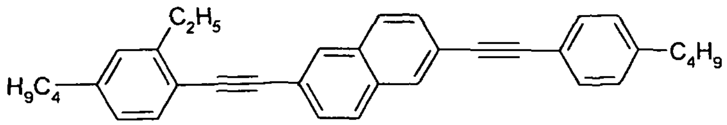

**MS (EI):** m/z (%) = 468 (100, $M^+$), 425 (20, $[M - Propyl]^+$), 191 (16, $[M - 2x Propyl]^{2+}$).
$\Delta\varepsilon$ = +3,0
$\Delta n$ = 0,47
$\gamma_1$ = 3442 mPa·s
K 97 N 196 I

5) Bis-2,6-(2-Ethyl-4-n-butyl-phenylethynyl)-naphthalin

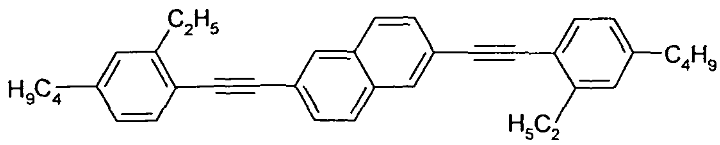

**MS (EI):** m/z (%) = 496 (100, $M^+$), 453 (13, $[M - Propyl]^+$), 205 (12, $[M - 2x Propyl]^{2+}$).
$\Delta\varepsilon$ = +0,9
$\Delta n$ = 0,425
$\gamma_1$ = 3538 mPa·s
K 138 I

6) Bis-2,6-(4-n-Butyl-phenylethynyl)-naphthalin

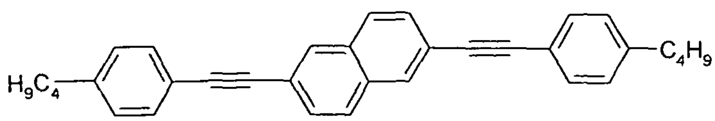

**MS (EI):** m/z (%) = 440 (100, $M^+$), 397 (31, $[M - Propyl]^+$), 354 (19, $[M - 2x Propyl]^+$), 177 (19, $[M - 2x Propyl]^{2+}$).
$\Delta\varepsilon$ = +3,2
$\Delta n$ = 0,52
K 165 N 263 I

7) 2-(5-n-Butyl-thiophen-1-ethynyl)-6-(2-ethyl-4-n-butyl-phenylethynyl)-naphthalin

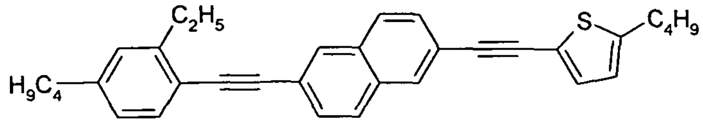

**MS (EI):** m/z (%) = 474 (100, M+), 431 (27, [M - Propyl]+), 194 (18, [M - 2x Propyl]2+).
$\Delta\varepsilon$=+1,8
$\Delta n$ = 0,47
$\gamma_1$ = 2489 mPa·s
K 66 N 105 I

8) 2-(2-Ethyl-4-n-butyl-phenylethynyl)-6-(4-n-butyl-phenylethynyl)-3,4,5-trifluoro-naphthalin

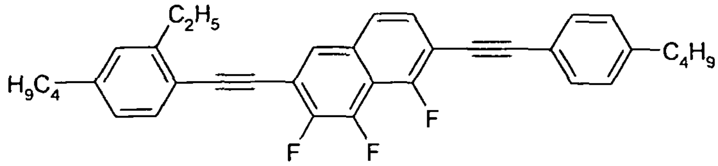

9) 1-(6-n-Butylthio-2-naphtylethynyl)-2-ethyl-4-(4-n-Hexyl-phenylethynyl)-benzol

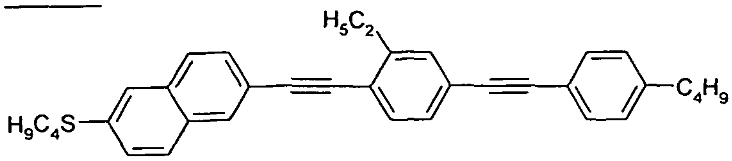

**MS (EI):** m/z (%) = 500 (100, M+), 485 (2), 457 (5), 443 (5), 429 (2), 400 (10), 385 (5).
$\Delta\varepsilon$ = +3,3
$\Delta n$ = 0,51
$\gamma_1$ = 12740 mPa·s
K 120 N 175 I

10) 1-(6-n-Butylthio-2-naphtylethynyl)-2-ethyl-4-(3,4,5-trifluor-phenylethynyl)-benzol

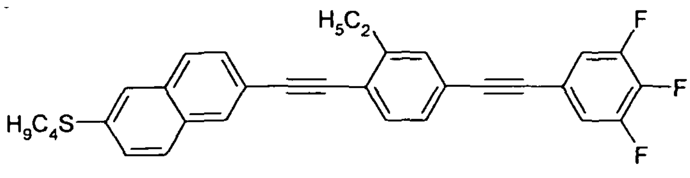

**MS (EI):** m/z (%) = 498 (100, M+), 483 (3), 441 (9), 427 (10), 407 (5), 393 (10), 382 (4).
$\Delta\varepsilon$=+11,4
$\Delta n$ = 0,46
$\gamma_1$ =4180mPa·s
K 83 N 107 I

Mischungsbeispiele

Es wird ein Flüssigkristallmedium C-1 als Referenz-Basismischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 92,6 | °C |
| Nr. | Abkürzung | | | | |
| 1 | BCH-3F.F | 12,0% | | | |
| 2 | BCH-5F.F | 10,0% | $\Delta n$ (20°C, 589,3 nm) | = 0,094 | |
| 3 | ECCP-30CF3 | 5,00% | | | |
| 4 | ECCP-50CF3 | 5,00% | | | |
| 5 | CBC-33F | 2,00% | $\Delta\varepsilon$ (20°C, 1 kHz) | = 5,4 | |
| 6 | CBC-53F | 2,00 % | | | |
| 7 | CBC-55F | 2,00% | | | |
| 8 | PCH-6F | 8,00% | | | |
| 9 | PCH-7F | 6,00% | | | |
| 10 | CCP-20CF3 | 8,00 % | | | |
| 11 | CCP-30CF3 | 12,0 % | | | |
| 12 | CCP-40CF3 | 7,00% | | | |
| 13 | CCP-50CF3 | 11,0% | | | |
| 14 | PCH-5F | 10,0 % | | | |
| Σ | | 100,0 % | | | |

Zu diesem Medium werden jeweils 10 Gew.-% einer Testsubstanz aus den Synthesebeispielen gegeben, homogenisiert und bezüglich der physikalischen Eigenschaften vermessen.

Mischungsbeispiel M-1

10 % 1-(6-n-Butyl-2-naphtylethynyl)-3-ethyl-4-(4-n-Hexyl-phenylethynyl)-benzol (Synthesebeispiel 1, Stufe 1.6) 90 % C-1

Mischungsbeispiel M-2

10 % 2-(2-Ethyl-4-n-butyl-phenylethynyl)-6-[E-1,2-Difluor-2-(4-n-butyl-phenyl)-ethylenyl]-naphthalin (Synthesebeispiel 2, Stufe 2.4) 90 % C-1

Die Ergebnisse und der Vergleich mit der Basismischung C-1 werden in Tabelle 1 wiedergegeben.

Die Mischungen M-1/2 werden für Anwendungen im Mikrowellenbereich, insbesondere für Phasenschieber für 'phased array' Antennen verwendet.

Tabelle 1: Eigenschaften der Mischungen bei 19 GHz (20°C)

| Medium | $\varepsilon_{r,\parallel}$ | $E_{r,\perp}$ | T | tan $\delta_{\varepsilon,r,\parallel}$ | tan $\delta_{\varepsilon,r,\perp}$ | $\eta$ |
|---|---|---|---|---|---|---|
| M-1 | 2,66 | 2,30 | 0,134 | 0,0042 | 0,0113 | 11,9 |
| M-2 | 2,66 | 2,30 | 0,136 | 0,0043 | 0,0114 | 11,9 |
| C-1 | 2,56 | 2,29 | 0,105 | 0,0050 | 0,0139 | 8,5 |

Die Steuerbarkeit $\tau$ und die Materialgüte $\eta$ sind gegenüber der Vergleichsmischung C-1 deutlich verbessert. Die dielektrischen Verlustfaktoren tan $\delta_{\varepsilon,r}$ sind reduziert.

**Patentansprüche**

1. Verwendung eines Flüssigkristallmediums, **dadurch gekennzeichnet, dass** es eine oder mehrere Verbindungen der Formel I enthält

$$R^1\text{-}(A^1\text{-}Z^1)_m\text{-}A^2\text{-}Z^2\text{-}[A^3]_p\text{-}Z^3\text{-}A^4\text{-}(Z^5\text{-}A^5)_n\text{-}R^2 \quad I$$

worin
$A^1$, $A^2$, $A^3$, $A^4$, $A^5$ jeweils unabhängig voneinander,

a) 1,4-Phenylen, worin ein oder mehrere, bevorzugt ein bis zwei CH-Gruppen durch N ersetzt sein können, oder eine 2,6-Naphthylengruppe der Formel

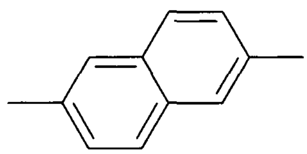

b) einen Rest aus der Gruppe Thiophen-2,5-diyl, Furan-2,5-diyl oder eine Gruppe der Formel

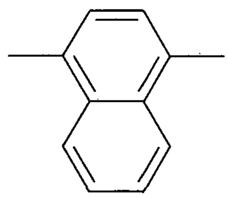

,

oder
c) trans-1,4-Cyclohexylen oder Cyclohexenylen, worin auch eine oder zwei nicht benachbarte $CH_2$-Gruppen durch -O- und/oder - S- ersetzt sein können, und worin H durch F ersetzt sein kann, 1,4-Bicyclo(2,2,2)-octylen, Cylcobut-1,3-diyl und Spiro[3.3]heptan-2,6-diyl,

und worin in den Gruppen a), b) und c)
auch ein oder mehrere H-Atome durch eine Gruppe nach der Definition von L substituiert sein können,
und
wobei eine oder mehrere der Gruppen $A^2$, $A^3$ und $A^4$ eine Gruppe der Formel

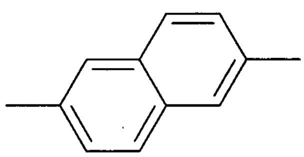

bedeutet,

L unabhängig verzweigtes oder unverzweigtes Alkyl mit 1 bis 12 C-Atomen, Alkenyl oder Alkinyl mit 2 bis 12 C-Atomen, worin jeweils, unabhängig voneinander, ein oder mehrere Wasserstoffatome durch F oder Cl ersetzt sein können und auch eine oder mehrere "$-CH_2-$"-Gruppen durch O ersetzt sein können, $C_3$-$C_6$ Cycloalkyl oder $C_3$-$C_6$ Cycloalkenyl, F, Cl, Br, CN, NCS, SCN oder $SF_5$,
$Z^2$, $Z^3$ unabhängig -C≡C- oder

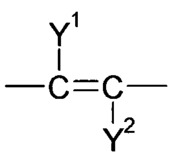

,

$Y^1$, $Y^2$ unabhängig voneinander H, F, Cl, $C_1$-$C_{10}$ Alkyl,

$Z^1$, $Z^5$ unabhängig voneinander, eine Einfachbindung, -C≡C-, -CH=CH-, $-CH_2O-$, -(CO)O-, $-CF_2O-$, $-CF_2CF_2-$, $-CH_2CF_2-$, $-CH_2CH_2-$, $-(CH_2)_4-$, -CH=CF- oder -CF=CF-, wobei asymmetrische Brücken nach beiden Seiten orientiert sein können,

$R^1$ und $R^2$ unabhängig voneinander einen halogenierten oder unsubstituierten Alkylrest mit 1 bis 15 C-Atomen, wobei in diesen Resten auch eine oder mehrere $CH_2$-Gruppen jeweils unabhängig voneinander durch -C≡C-, -CH=CH-, -CF=CF-, -CF=CH-, -CH=CF-, -(CO)-, -S- und -O- so ersetzt sein können, dass S- oder O-Atome nicht direkt miteinander verknüpft sind,

F, Cl, Br, CN, $CF_3$, $OCF_3$, -NCS oder $SF_5$, $R^2$ auch H,

m, n unabhängig voneinander 0, 1 oder 2, und

p 1 oder 2

und

zusätzlich eine oder mehrere Verbindungen ausgewählt aus den Verbindungen der Formel II enthält:

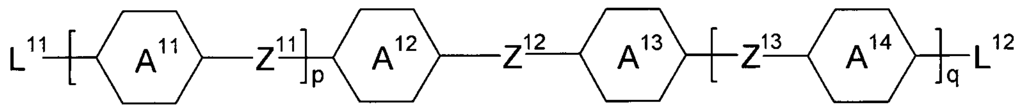

II

worin bedeuten:

$L^{11}$ $R^{11}$ oder $X^{11}$,

$L^{12}$ $R^{12}$ oder $X^{12}$,

$R^{11}$ und $R^{12}$ unabhängig voneinander unfluoriertes Alkyl oder unfluoriertes Alkoxy mit 1 bis 17 C-Atomen oder unfluoriertes Alkenyl, unfluoriertes Alkinyl, unfluoriertes Alkenyloxy, oder unfluoriertes Alkoxyalkyl mit 2 bis 15 C-Atomen,

$X^{11}$ und $X^{12}$ unabhängig voneinander F, Cl, Br, -CN, -NCS, -SCN, $-SF_5$, fluoriertes Alkyl oder fluoriertes Alkoxy mit 1 bis 7 C-Atomen oder fluoriertes Alkenyl, fluoriertes Alkenyloxy oder fluoriertes Alkoxyalkyl mit 2 bis 7 C-Atomen,

p, q unabhängig 0 oder 1,

$Z^{11}$ bis $Z^{13}$ unabhängig voneinander *trans*- -CH=CH-, *trans*--CF=CF-, -C=C- oder eine Einfachbindung, und

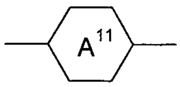 bis 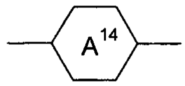

unabhängig voneinander

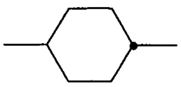, 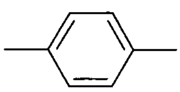, 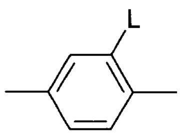,

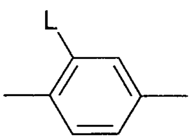, 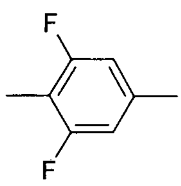, 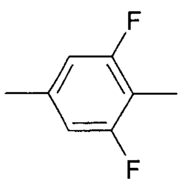,

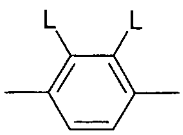,

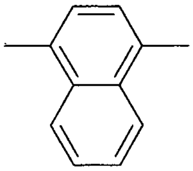 , 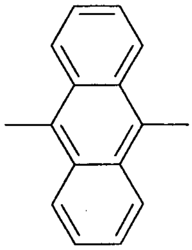 oder 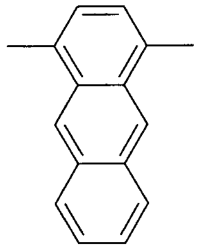 ,

worin L unabhängig verzweigtes oder unverzweigtes Alkyl, Alkenyl oder Alkinyl mit 1 bis 12 C-Atomen, worin unabhängig voneinander auch eine oder mehrere "-$CH_2$-"-Gruppen durch O ersetzt sein können, $C_3$-$C_6$ Cycloalkyl, $C_3$-$C_6$ Cycloalkenyl, fluoriertes Alkyl oder Alkenyl, fluoriertes Alkyloxy oder Alkenyloxy, F, Cl, Br, CN, NCS, SCN oder $SF_5$,bedeutet,
in einem Bauteil für die Hochfrequenztechnik.

2. Verwendung nach Anspruch 1, **dadurch gekennzeichnet, dass** die Gruppen $A^2$, $A^3$ und $A^4$ mit insgesamt mindestens einer Gruppe L substituiert sind.

3. Verwendung nach Anspruch 1 oder 2, **dadurch gekennzeichnet, dass** die Gruppe $A^3$ ein optional mit L substituierter 1,4-Phenylenring ist.

4. Verwendung nach Anspruch 1 oder 2, **dadurch gekennzeichnet, dass** eine oder mehrere Gruppen $A^3$ eine Gruppe der Formel

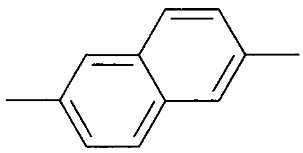

bedeutet.

5. Verwendung nach einem oder mehreren der Ansprüche 1 bis 4, **dadurch gekennzeichnet, dass** die Ringe $A^2$ und $A^4$ einen optional substituierten 1,4-Phenylenring bedeuten.

6. Verwendung nach einem oder mehreren der Ansprüche 1 bis 5, **dadurch gekennzeichnet, dass** m + n + p 1 oder 2 ist.

7. Bauteil für die Hochfrequenztechnik, **dadurch gekennzeichnet, dass** es ein Flüssigkristallmedium nach einem der Ansprüche 1 bis 6 enthält.

8. Bauteil nach Anspruch 7, **dadurch gekennzeichnet, dass** es sich um einen Phasenschieber oder mehrere funktionell verbundene Phasenschieber oder eine ,phased array'-Antenne handelt, wobei das Bauteil optional abstimmbar ist.

9. Phased array' Antenne, **dadurch gekennzeichnet, dass** sie ein oder mehrere Bauteile nach Anspruch 7 oder 8 enthält.

10. Verbindungen der Formel I*

$$R^1\text{-}(A^1\text{-}Z^1)_m\text{-}A^2\text{-}Z^2\text{-}[A^3]\text{-}_p\text{-}Z^3\text{-}A^4\text{-}(Z^5\text{-}A^5)_n\text{-}R^2 \qquad I^*$$

worin
$A^1$, $A^2$, $A^3$, $A^4$, $A^5$ jeweils unabhängig voneinander,

a) 1,4-Phenylen, worin ein oder mehrere, bevorzugt ein bis zwei CH-Gruppen durch N ersetzt sein können, oder eine 2,6-Naphthylengruppe der Formel

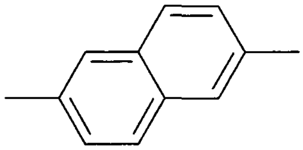

b) einen Rest aus der Gruppe Thiophen-2,5-diyl, Furan-2,5-diyl oder eine Gruppe der Formel

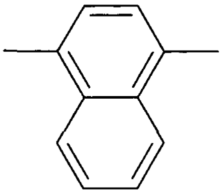

,

oder

c) trans-1,4-Cyclohexylen oder Cyclohexenylen, worin auch eine oder zwei nicht benachbarte $CH_2$-Gruppen durch -O- und/oder -S- ersetzt sein können, und worin H durch F ersetzt sein kann, 1,4-Bicyclo(2,2,2)-octylen, Cylcobut-1,3-diyl und Spiro[3.3]heptan-2,6-diyl,

und worin in den Gruppen a), b) und c)
auch ein oder mehrere H-Atome durch eine Gruppe nach der Definition von L substituiert sein können,
wobei eine oder mehrere Gruppen $A^3$ eine Gruppe der Formel

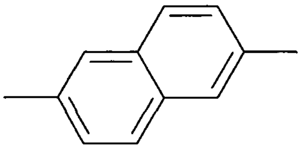

bedeutet und,
wobei die Gruppen $A^2$, $A^3$ und $A^4$ mit insgesamt einer oder mehreren Gruppen L substituiert sind,

L unabhängig verzweigtes oder unverzweigtes Alkyl mit 1 bis 12 C-Atomen, Alkenyl oder Alkinyl mit 2 bis 12 C-Atomen, worin jeweils, unabhängig voneinander, ein oder mehrere Wasserstoffatome durch F oder Cl ersetzt sein können und auch eine oder mehrere "-$CH_2$-"-Gruppen durch O ersetzt sein können, $C_3$-$C_6$ Cycloalkyl oder $C_3$-$C_6$ Cycloalkenyl, F, Cl, Br, CN, NCS, SCN oder $SF_5$,
$Z^2$, $Z^3$ unabhängig -C≡C- oder

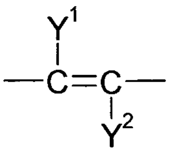

,

$Y^1$, $Y^2$ unabhängig voneinander H, F, Cl, $C_1$-$C_{10}$ Alkyl,
$Z^1$, $Z^5$ unabhängig voneinander, eine Einfachbindung, -C≡C-, -CH=CH-, -$CH_2$O-, -(CO)O-, -$CF_2$O-, -$CF_2CF_2$-, -$CH_2CF_2$-, -$CH_2CH_2$-, -$(CH_2)_4$-, -CH=CF- oder -CF=CF-, wobei asymmetrische Brücken nach beiden Seiten orientiert sein können,
$R^1$ und $R^2$ unabhängig voneinander einen halogenierten oder unsubstituierten Alkylrest mit 1 bis 15 C-Atomen, wobei in diesen Resten auch eine oder mehrere $CH_2$-Gruppen jeweils unabhängig voneinander durch -C≡C-, -CH=CH-, -CF=CF-, -CF=CH-, -CH=CF-, -(CO)- und -S- so ersetzt sein können, dass S-Atome nicht direkt miteinander verknüpft sind, F, Cl, Br, CN, $CF_3$, $OCF_3$ oder $SF_5$, $R^2$ auch H,
m, n unabhängig voneinander 0, 1 oder 2, und
p 1 oder 2

bedeuten.

**11.** Verbindungen nach Anspruch 10, **dadurch gekennzeichnet, dass**

$R^1$ und $R^2$ unabhängig voneinander einen halogenierten oder unsubstituierten Alkylrest mit 1 bis 15 C-Atomen, wobei in diesen Resten auch eine oder mehrere $CH_2$-Gruppen jeweils unabhängig voneinander durch -C=C-, -CH=CH-, -CF=CF-, -CF=CH-, -CH=CF- und -(CO)- ersetzt sein können,

bedeuten.

**12.** Verbindungen nach Anspruch 10 oder 11, **dadurch gekennzeichnet, dass** die Brückengruppen

$Z^2$ und $Z^3$ eine Gruppe -C=C- und die andere Brückengruppe eine Gruppe -CF=CF-, oder beide Brückengruppen eine Gruppe -C≡C-

bedeuten.

**13.** Verbindungen nach einem oder mehreren der Ansprüche 10 bis 12, **dadurch gekennzeichnet, dass**

m + n + p 1 oder 2 ist

**14.** Bauteil für die Hochfrequenztechnik, **dadurch gekennzeichnet, dass** es eine Verbindung der Formel I* nach einem der Ansprüche 10 bis 13 enthält.

**15.** Bauteil nach Anspruch 14, **dadurch gekennzeichnet, dass** es sich um einen Phasenschieber oder mehrere funktionell verbundene Phasenschieber oder eine ‚phased array'-Antenne handelt, wobei das Bauteil optional abstimmbar ist.

## Claims

**1.** Use of a liquid-crystal medium, **characterised in that** it comprises one or more compounds of the formula I

$$R^1\text{-}(A^1\text{-}Z^1)_m\text{-}A^2\text{-}Z^2\text{-}[A^3]_p\text{-}Z^3\text{-}A^4\text{-}(Z^5\text{-}A^5)_n\text{-}R^2 \quad I$$

in which
$A^1$, $A^2$, $A^3$, $A^4$, $A^5$ each, independently of one another, denote

a) 1,4-phenylene, in which one or more, preferably one to two, CH groups may be replaced by N, or a 2,6-naphthylene group of the formula

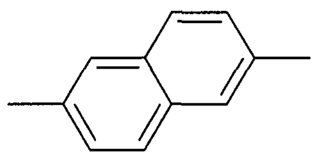

b) a radical from the group thiophene-2,5-diyl, furan-2,5-diyl or a group of the formula

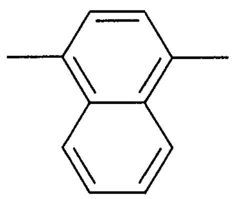

,

or
c) trans-1,4-cyclohexylene or cyclohexenylene, in which, in addition, one or two non-adjacent $CH_2$ groups may be replaced by -O- and/or -S-, and in which H may be replaced by F, 1,4-bicyclo[2.2.2]octylene, cyclobutane-1,3-diyl or spiro[3.3]-heptane-2,6-diyl,

and in which, in groups a), b) and c),
one or more H atoms may also be substituted by a group according to the definition of L,
and
where one or more of the groups $A^2$, $A^3$ and $A^4$ denote a group of the formula

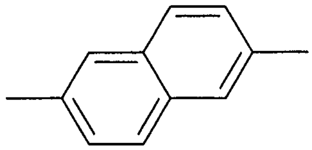

,

L independently denotes branched or unbranched alkyl having 1 to 12 C atoms, alkenyl or alkynyl having 2 to 12 C atoms, in which in each case, independently of one another, one or more hydrogen atoms may be replaced by F or Cl and, in addition, one or more "$-CH_2-$" groups may be replaced by O, or denotes $C_3$-$C_6$ cycloalkyl or $C_3$-$C_6$ cycloalkenyl, F, Cl, Br, CN, NCS, SCN or $SF_5$,
$Z^2$, $Z^3$ independently denote -C=C- or

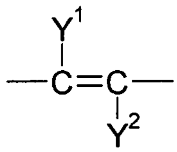

,

$Y^1$, $Y^2$, independently of one another, denote H, F, Cl, $C_1$-$C_{10}$ alkyl,
$Z^1$, $Z^5$, independently of one another, denote a single bond, -C≡C-, -CH=CH-, $-CH_2O-$, -(CO)O-, $-CF_2O-$, $-CF_2CF_2-$, $-CH_2CF_2-$, $-CH_2CH_2-$, $-(CH_2)_4-$, -CH=CF- or -CF=CF-, where asymmetrical bridges may be oriented to both sides,
$R^1$ and $R^2$, independently of one another, denote a halogenated or unsubstituted alkyl radical having 1 to 15 C atoms, where, in addition, one or more $CH_2$ groups in these radicals may each be replaced, independently of one another, by -C≡C-, -CH=CH-, -CF=CF-, -CF=CH-, -CH=CF-, -(CO)-, -S- or -O- in such a way that S or O atoms are not linked directly to one another,
or denote F, Cl, Br, CN, $CF_3$, $OCF_3$, -NCS or $SF_5$,
$R^2$ also denotes H,
m, n, independently of one another, denote 0, 1 or 2, and
p denotes 1 or 2,

and
additionally comprises one or more compounds selected from the compounds of the formula II:

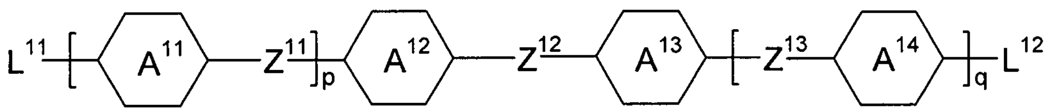

II

in which:

$L^{11}$ denotes $R^{11}$ or $X^{11}$,
$L^{12}$ denotes $R^{12}$ or $X^{12}$,
$R^{11}$ and $R^{12}$, independently of one another, denote unfluorinated alkyl or unfluorinated alkoxy having 1 to 17 C atoms or unfluorinated alkenyl, unfluorinated alkynyl, unfluorinated alkenyloxy or unfluorinated alkoxyalkyl having 2 to 15 C atoms,
$X^{11}$ and $X^{12}$, independently of one another, denote F, Cl, Br, -CN, -NCS, -SCN, $-SF_5$, fluorinated alkyl or fluorinated alkoxy having 1 to 7 C atoms or fluorinated alkenyl, fluorinated alkenyloxy or fluorinated alkoxyalkyl having 2 to 7 C atoms,
p, q independently denote 0 or 1,

$Z^{11}$ to $Z^{13}$, independently of one another, denote *trans*-CH=CH-, *trans*-CF=CF-, -C=C- or a single bond, and

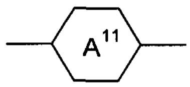 to 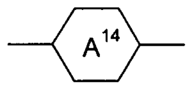 ,

independently of one another, denote

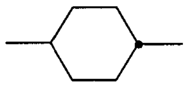 , 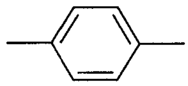 , 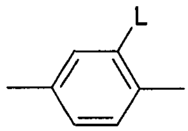 ,

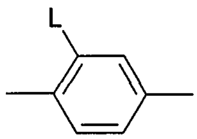 , 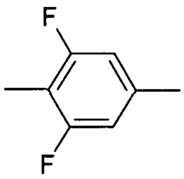 , 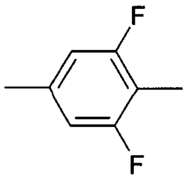 ,

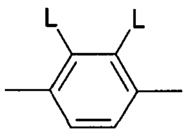 ,

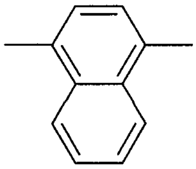 , 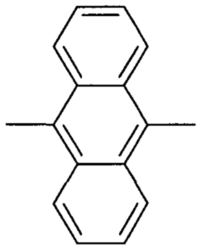 or 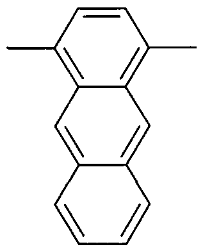 ,

in which L independently denotes branched or unbranched alkyl, alkenyl or alkynyl having 1 to 12 C atoms, in which, independently of one another, one or more "$-CH_2-$" groups may also be replaced by O, or denotes $C_3$-$C_6$ cycloalkyl, $C_3$-$C_6$ cycloalkenyl, fluorinated alkyl or alkenyl, fluorinated alkoxy or alkenyloxy, F, Cl, Br, CN, NCS, SCN or $SF_5$. in a component for high-frequency technology.

2. Use according to Claim 1, **characterised in that** the groups $A^2$, $A^3$ and $A^4$ are substituted by a total of at least one group L.

3. Use according to Claim 1 or 2, **characterised in that** the group $A^3$ is a 1,4-phenylene ring which is optionally substituted by L.

4. Use according to Claim 1 or 2, **characterised in that** one or more groups $A^3$ denote a group of the formula

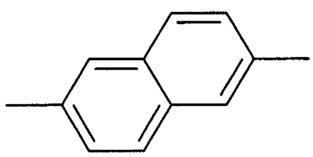

5. Use according to one or more of Claims 1 to 4, **characterised in that** the rings $A^2$ and $A^4$ denote an optionally substituted 1,4-phenylene ring.

**6.** Use according to one or more of Claims 1 to 5, **characterised in that** m + n + p is 1 or 2.

**7.** Component for high-frequency technology, **characterised in that** it contains a liquid-crystalline medium according to one of Claims 1 to 6.

**8.** Component according to Claim 7, **characterised in that** it is a phase shifter or a plurality of functionally connected phase shifters or a 'phased array' antenna, where the component is optionally tuneable.

**9.** 'Phased array' antenna, **characterised in that** it contains one or more components according to Claim 7 or 8.

**10.** Compounds of the formula I*

$$R^1\text{-}(A^1\text{-}Z^1)_m\text{-}A^2\text{-}Z^2\text{-}[A^3]_p\text{-}Z^3\text{-}A^4\text{-}(Z^5\text{-}A^5)_n\text{-}R^2 \qquad I^*$$

in which
$A^1$, $A^2$, $A^3$, $A^4$, $A^5$ each, independently of one another, denote

a) 1,4-phenylene, in which one or more, preferably one to two, CH groups may be replaced by N, or a 2,6-naphthylene group of the formula

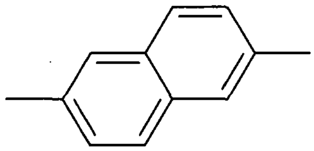

b) a radical from the group thiophene-2,5-diyl, furan-2,5-diyl or a group of the formula

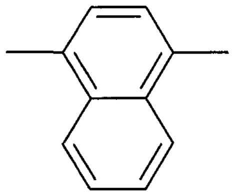

,

or
c) trans-1,4-cyclohexylene or cyclohexenylene, in which, in addition, one or two non-adjacent $CH_2$ groups may be replaced by -O- and/or -S-, and in which H may be replaced by F, 1,4-bicyclo[2.2.2]octylene, cyclobutane-1,3-diyl or spiro[3.3]-heptane-2,6-diyl,

and in which, in groups a), b) and c),
one or more H atoms may also be substituted by a group according to the definition of L,
where one or more of the groups $A^3$ denote a group of the formula

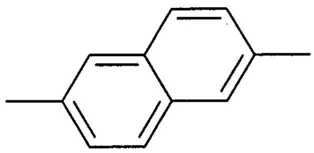

and
where the groups $A^2$, $A^3$ and $A^4$ are substituted by a total of one or more groups L,

L independently denotes branched or unbranched alkyl having 1 to 12 C atoms, alkenyl or alkynyl having 2 to 12 C atoms, in which in each case, independently of one another, one or more hydrogen atoms may be replaced by F or Cl and, in addition, one or more "-$CH_2$-" groups may be replaced by O, or denotes $C_3$-$C_6$ cycloalkyl or $C_3$-$C_6$ cycloalkenyl, F, Cl, Br, CN, NCS, SCN or $SF_5$,

$Z^2$, $Z^3$ independently denote -C≡C- or

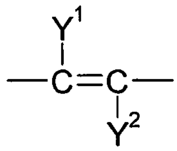 ,

$Y^1$, $Y^2$, independently of one another, denote H, F, Cl, $C_1$-$C_{10}$ alkyl,
$Z^1$, $Z^5$, independently of one another, denote a single bond, -C≡C-, -CH=CH-, $-CH_2O-$, -(CO)O-, $-CF_2O-$, $-CF_2CF_2-$, $-CH_2CF_2-$, $-CH_2CH_2-$, $-(CH_2)_4-$, -CH=CF- or -CF=CF-, where asymmetrical bridges may be oriented to both sides,
$R^1$ and $R^2$, independently of one another, denote a halogenated or unsubstituted alkyl radical having 1 to 15 C atoms, where, in addition, one or more $CH_2$ groups in these radicals may each be replaced, independently of one another, by -C≡C-, -CH=CH-, -CF=CF-, -CF=CH-, -CH=CF-, -(CO)- or -S- in such a way that S atoms are not linked directly to one another, F, Cl, Br, CN, $CF_3$, $OCF_3$ or $SF_5$, $R^2$ also denotes H,
m, n, independently of one another, denote 0, 1 or 2, and
p denotes 1 or 2.

**11.** Compounds according to Claim 10, **characterised in that**

$R^1$ and $R^2$, independently of one another, denote a halogenated or unsubstituted alkyl radical having 1 to 15 C atoms, where, in addition, one or more $CH_2$ groups in these radicals may each be replaced, independently of one another, by -C≡C-, -CH=CH-, -CF=CF-, -CF=CH-, -CH=CF- or -(CO)-.

**12.** Compounds according to Claim 10 or 11, **characterised in that** the bridging groups

$Z^2$ and $Z^3$ denote a group -C≡C- and the other bridging group denotes a group -CF=CF-, or both bridging groups denote a group -C≡C-.

**13.** Compounds according to one or more of Claims 10 to 12, **characterised in that**

m + n + p is 1 or 2.

**14.** Component for high-frequency technology, **characterised in that** it contains a compound of the formula I* according to one of Claims 10 to 13.

**15.** Component according to Claim 14, **characterised in that** it is a phase shifter or a plurality of functionally connected phase shifters or a 'phased array' antenna, where the component is optionally tuneable.

## Revendications

**1.** Utilisation d'un milieu cristallin liquide, **caractérisée en ce qu'**il comprend un ou plusieurs composé(s) de la formule I :

$$R^1\text{-}(A^1\text{-}Z^1)_m\text{-}A^2\text{-}Z^2\text{-}[A^3]_p\text{-}Z^3\text{-}A^4\text{-}(Z^5\text{-}A^5)_n\text{-}R^2 \quad I$$

dans laquelle :

$A^1$, $A^2$, $A^3$, $A^4$, $A^5$ représentent chacun, indépendamment les uns des autres,
a) 1,4-phénylène, où un ou plusieurs groupe(s) CH, de façon préférable un ou deux, peut/peuvent être remplacé(s) par N, ou un groupe 2,6-naphtylène de la formule :

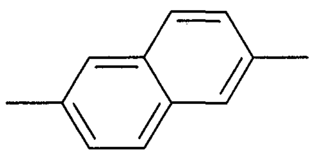

b) un radical pris parmi le groupe thiophène-2,5-diyle, furan-2,5-diyle ou un groupe de la formule :

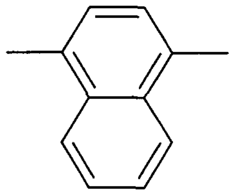

,

ou

c) trans-1,4-cyclohexylène ou cyclohexénylène, où, en outre, un ou deux groupe(s) $CH_2$ non adjacents peut/peuvent être remplacé(s) par -O- et/ou -S-, et où H peut être remplacé par F, 1,4-bicyclo[2.2.2]octylène, cyclobutane-1,3-diyle ou spiro[3.3]-heptane-2,6-diyle,

et où, dans les groupes a), b) et c),
un ou plusieurs atome(s) de H peut/peuvent également être substitué(s) par un groupe conformément à la définition de L,
et
où un ou plusieurs des groupes $A^2$, $A^3$ et $A^4$ représente(nt) un groupe de la formule :

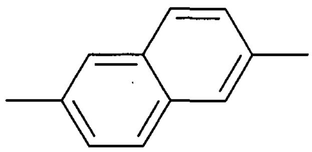

,

L représente de manière indépendante alkyle ramifié ou non ramifié comportant 1 à 12 atome(s) de C, alkényle ou alkynyle comportant 2 à 12 atomes de C, où, dans chaque cas, indépendamment les uns des autres, un ou plusieurs atome(s) d'hydrogène peut/peuvent être remplacé(s) par F ou Cl et, en outre, un ou plusieurs groupe(s) "$-CH_2-$" peut/peuvent être remplacé(s) par O, ou représente $C_3$-$C_6$ cycloalkyle ou $C_3$-$C_6$ cycloalkényle, F, Cl, Br, CN, NCS, SCN ou $SF_5$,

$Z^2$, $Z^3$ représentent de manière indépendante -C=C- ou

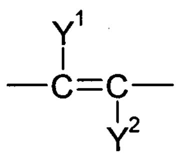

,

$Y^1$, $Y^2$ représentent de manière indépendante, H, F, Cl, $C_1$-$C_{10}$ alkyle,

$Z^1$, $Z^5$ représentent, indépendamment l'un de l'autre, une liaison simple, -C≡C-, -CH=CH-, $-CH_2O-$, -(CO)O-, $-CF_2O-$, $-CF_2CF_2-$, $-CH_2CF_2-$, $-CH_2CH_2-$, $-(CH_2)_4-$, -CH=CF- ou -CF=CF-, où des ponts asymétriques peuvent être orientés sur les deux côtés,

$R^1$ et $R^2$ représentent, indépendamment l'un de l'autre, un alkyle halogéné ou non substitué comportant 1 à 15 atome(s) de C, où, en outre, un ou plusieurs groupe(s) $CH_2$ dans ces radicaux peut/peuvent chacun être remplacé(s), indépendamment les uns des autres, par -C≡C-, -CH=CH-, -CF=CF-, -CF=CH-, -CH=CF-, -(CO)-, -S- ou -O- de telle sorte que des atomes de S ou de O ne soient pas liés directement les uns aux autres, ou représentent F, Cl, Br, CN, $CF_3$, $OCF_3$, -NCS ou $SF_5$, $R^2$ représente également H,

m, n représentent, indépendamment l'un de l'autre, 0, 1 ou 2, et

p représente 1 ou 2,

et
comprend de façon additionnelle un ou plusieurs composé(s) choisi(s) parmi les composés de la formule II :

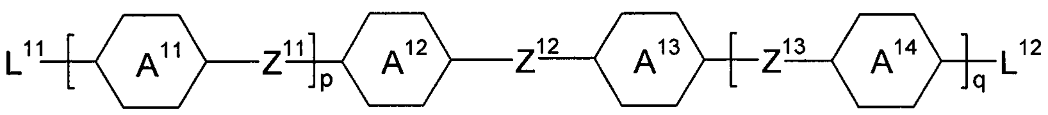 II

dans laquelle :

$L^{11}$ représente $R^{11}$ ou $X^{11}$,
$L^{12}$ représente $R^{12}$ ou $X^{12}$,
$R^{11}$ et $R^{12}$ représentent, indépendamment l'un de l'autre, alkyle non fluoré ou alcoxy non fluoré comportant 1 à 17 atome(s) de C ou alkényle non fluoré, alkynyle non fluoré, alkényloxy non fluoré ou alcoxyalkyle non fluoré comportant 2 à 15 atomes de C,
$X^{11}$ et $X^{12}$ représentent, indépendamment l'un de l'autre, F, Cl, Br, -CN, -NCS, -SCN, $-SF_5$, alkyle fluoré ou alcoxy fluoré comportant 1 à 7 atome(s) de C ou alkényle fluoré, alkényloxy fluoré ou alcoxyalkyle fluoré comportant 2 à 7 atomes de C,
p, q représentent de manière indépendante 0 ou 1,
$Z^{11}$ à $Z^{13}$ représentent, indépendamment les uns des autres, *trans*-CH=CH-, *trans*-CF=CF-, -C=C- ou une liaison simple, et

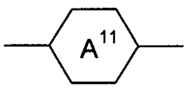 à 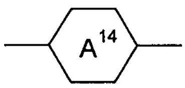 ,

représentent, indépendamment les uns des autres,

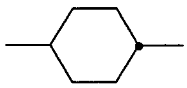 , 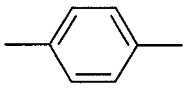 , 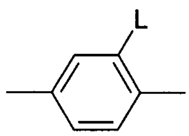 ,

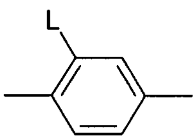 , 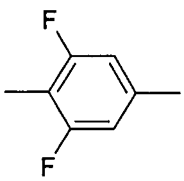 , 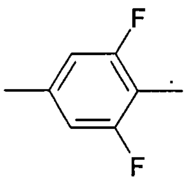 ,

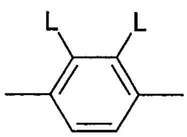 ,

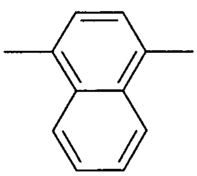 , 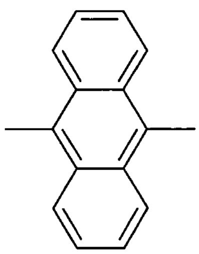 ou 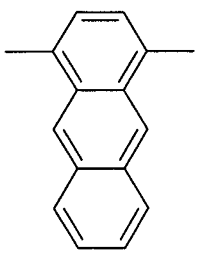 ,

où L représente de manière indépendante alkyle, alkényle ou alkynyle ramifié ou non ramifié comportant 1 à 12 atome(s) de C, où, indépendamment les uns des autres, un ou plusieurs groupe(s) "$-CH_2-$" peut/peuvent également être remplacé(s) par O, ou représente $C_3$-$C_6$ cycloalkyle, $C_3$-$C_6$ cycloalkényle, alkyle ou alkényle fluoré, alcoxy ou alkényloxy fluoré,

F, Cl, Br, CN, NCS, SCN ou $SF_5$
dans un composant pour une technologie haute fréquence.

**2.** Utilisation selon la revendication 1, **caractérisée en ce que** les groupes $A^2$, $A^3$ et $A^4$ sont substitués par un total d'au moins un groupe L.

**3.** Utilisation selon la revendication 1 ou 2, **caractérisée en ce que** le groupe $A^3$ est un cycle 1,4-phénylène qui est en option substitué par L.

**4.** Utilisation selon la revendication 1 ou 2, **caractérisée en ce qu'**un ou plusieurs groupe(s) $A^3$ représente(nt) un groupe de la formule :

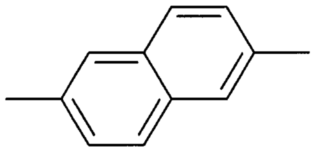

**5.** Utilisation selon une ou plusieurs des revendications 1 à 4, **caractérisée en ce que** les cycles $A^2$ et $A^4$ représentent un cycle 1,4-phénylène en option substitué.

**6.** Utilisation selon une ou plusieurs des revendications 1 à 5, **caractérisée en ce que** m + n + p est 1 ou 2.

**7.** Composant pour une technologie haute fréquence, **caractérisé en ce qu'**il contient un milieu cristallin liquide selon l'une des revendications 1 à 6.

**8.** Composant selon la revendication 7, **caractérisé en ce qu'**il s'agit d'un déphaseur ou d'une pluralité de déphaseurs connectés fonctionnellement ou d'une antenne 'réseau à commande de phase', où le composant peut en option être accordé.

**9.** Antenne 'réseau à commande de phase', **caractérisée en ce qu'**elle contient un ou plusieurs composant(s) selon la revendication 7 ou 8.

**10.** Composés de la formule I*:

$$R^1\text{-}(A^1\text{-}Z^1)_m\text{-}A^2\text{-}Z^2\text{-}[A^3]_p\text{-}Z^3\text{-}A^4\text{-}(Z^5\text{-}A^5)_n\text{-}R^2 \qquad I^*$$

dans laquelle :

$A^1$, $A^2$, $A^3$, $A^4$, $A^5$ représentent chacun, indépendamment les uns des autres,
a) 1,4-phénylène, où un ou plusieurs groupe(s) CH, de façon préférable un ou deux, peut/peuvent être remplacé(s) par N, ou un groupe 2,6-naphtylène de la formule :

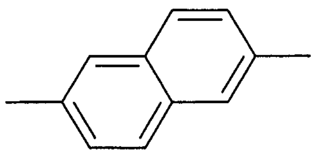

b) un radical pris parmi le groupe thiophène-2,5-diyle, furan-2,5-diyle ou un groupe de la formule :

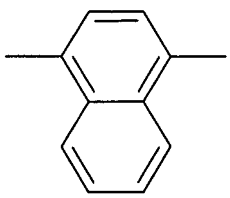

,

ou

c) trans-1,4-cyclohexylène ou cyclohexénylène, où, en outre, un ou deux groupe(s) $CH_2$ non adjacents peut/peuvent être remplacé(s) par -O- et/ou -S-, et où H peut être remplacé par F, 1,4-bicyclo[2.2.2]octylène, cyclobutane-1,3-diyle ou spiro[3.3]heptane-2,6-diyle,

et où, dans les groupes a), b) et c),
un ou plusieurs atome(s) de H peut/peuvent également être substitué(s) par un groupe conformément à la définition de L,
où un ou plusieurs des groupes $A^3$ représente(nt) un groupe de la formule :

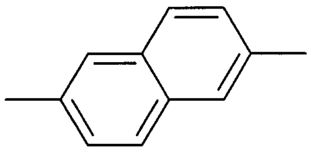

,

et
où les groupes $A^2$, A3 et $A^4$ sont substitués par un total d'un ou de plusieurs groupe(s) L

L représente de manière indépendante alkyle ramifié ou non ramifié comportant 1 à 12 atome(s) de C, alkényle ou alkynyle comportant 2 à 12 atomes de C, où, dans chaque cas, indépendamment les uns des autres, un ou plusieurs atome(s) d'hydrogène peut/peuvent être remplacé(s) par F ou Cl et, en outre, un ou plusieurs groupe(s) "$-CH_2-$" peut/peuvent être remplacé(s) par O, ou représente $C_3$-$C_6$ cycloalkyle ou $C_3$-$C_6$ cycloalkényle, F, Cl, Br, CN, NCS, SCN ou $SF_5$,
$Z^2$, $Z^3$ représentent de manière indépendante -C≡C- ou

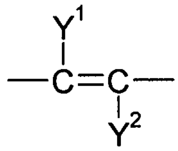

,

$Y^1$, $Y^2$ représentent de manière indépendante, H, F, Cl, $C_1$-$C_{10}$ alkyle,
$Z^1$, $Z^5$ représentent, indépendamment l'un de l'autre, une liaison simple, -C≡C-, -CH=CH-, $-CH_2O-$, -(CO)O-, $-CF_2O-$, $-CF_2CF_2-$, $-CH_2CF_2-$, $-CH_2CH_2-$, $-(CH_2)_4-$, -CH=CF- ou -CF=CF-, où des ponts asymétriques peuvent être orientés sur les deux côtés,
$R^1$ et $R^2$ représentent, indépendamment l'un de l'autre, un alkyle halogéné ou non substitué comportant 1 à 15 atome(s) de C, où, en outre, un ou plusieurs groupe(s) $CH_2$ dans ces radicaux peut/peuvent chacun être remplacé(s), indépendamment les uns des autres, par -C≡C-, -CH=CH-, -CF=CF-, -CF=CH-, -CH=CF-, -(CO)- ou -S- de telle sorte que des atomes de S ne soient pas liés directement les uns aux autres, F, Cl, Br, CN, $CF_3$, $OCF_3$ ou $SF_5$,
$R^2$ représente également H,
m, n représentent, indépendamment l'un de l'autre, 0, 1 ou 2, et
p représente 1 ou 2.

11. Composés selon la revendication 10, **caractérisés en ce que** :

$R^1$ et $R^2$ représentent, indépendamment l'un de l'autre, un radical alkyle halogéné ou non substitué comportant 1 à 15 atome(s) de C, où, en outre, un ou plusieurs groupe(s) $CH_2$ dans ces radicaux peut/peuvent chacun être remplacé(s), indépendamment les uns des autres, par -C≡C-, -CH=CH-, -CF=CF-, -CF=CH-, -CH=CF- ou -(CO)-.

12. Composés selon la revendication 10 ou 11, **caractérisés en ce que** l'un des groupes de pontage $Z^2$ et $Z^3$ représente un groupe -C≡C- et l'autre groupe de pontage représente un groupe -CF=CF-, ou les deux groupes de pontage représentent un groupe -C≡C-.

13. Composés selon une ou plusieurs des revendications 10 à 12, **caractérisés en ce que** :

m + n + p est 1 ou 2.

**14.** Composant pour une technologie haute fréquence, **caractérisé en ce qu'**il contient un composé de la formula I* selon l'une des revendications 10 à 13.

**15.** Composant selon la revendication 14, **caractérisé en ce qu'**il s'agit d'un déphaseur ou d'une pluralité de déphaseurs connectés fonctionnellement ou une antenne 'réseau à commande de phase', où le composant peut en option être accordé.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0968988 A1
- DE 19907941 A1
- DE 10120024 A1
- JP 08012599 A
- WO 2009086911 A1
- EP 2073290 A1
- WO 2008044695 A1
- JP 2004082439 A
- US 20020110650 A
- DE 102004029429 A
- JP 2005120208 A


### In der Beschreibung aufgeführte Nicht-Patentliteratur


- **S.-T. WU ; C.-S. HSU ; K.-F. SHYU.** *Appl. Phys. Lett.,* 1999, vol. 74 (3), 344-346
- **C. S. HSU ; K. F. SHYU ; Y.Y. CHUANG ; S.-T. WU.** *Liq. Cryst.,* 2000, vol. 27 (2), 283-287
- **LIAO et al.** *Int. Display Maufacturing Conference,* 21. Februar 2005
- **GAUZA et al.** *Jap. J. Appl. Phys.,* 2004, vol. 43, 7634-7638
- **Y.-M. LIAO et al.** *Liquid Crystals,* 2007, vol. 34 (4), 507-517
- **D.J. SPELLS et al.** *Liquid Crystals,* 2002, vol. 29 (12), 1529-32
- **CHIN-YEN CHANG et al.** *Liquid Crystals,* 2008, vol. 35 (1), 1-9
- **F. BABUDRI et al.** *Synthesis,* 2008, vol. 10, 1580-1588
- **A. GAEBLER ; A. MOESSINGER ; F. GOELDEN et al.** Liquid Crystal-Reconfigurable Antenna Concepts for Space Applications at Microwave and Millimeter Waves. *International Journal of Antennas and Propagation,* 2009, 7
- **A. PENIRSCHKE ; S. MÜLLER ; P. SCHEELE ; C. WEIL ; M. WITTEK ; C. HOCK ; R. JAKOBY.** Cavity Perturbation Method for Characterization of Liquid Crystals up to 35 GHz. *Proc. 34th European Microwave Conf. 2,* 2004, 545-548
- Merck Liquid Crystals, Physical Properties of Liquid Crystals. Merck KGaA, November 1997
- **A. PENIRSCHKE et al.** Cavity Perturbation Method for Characterization of Liquid Crystals up to 35GHz. *34th European Microwave Conference,* 545-548
- Direct Simulation of Material Permittivites ... **A. GAEBLER et al.** 12MTC 2009 - International Instrumentation and Measurement Technology Conference. IEEE, 2009, 463-467
- **A. PENIRSCHKE et al.** *34th European Microwave Conference,* 545-548
- **F. BABUDRI et al.** *Eur. J. Org. Chem.,* 2008, 1977-1982
- **BABUDRI et al.** *Synthesis,* 2008, 1580-1588